# EUROPEAN PATENT SPECIFICATION

(11) **EP 4 280 310 B1**
(45) Date of publication and mention of the grant of the patent: **23.09.2026**
(21) Application number: 22919273.7
(22) Date of filing: 31.03.2022
(51) Int. Cl.: H01M 10/052, H01M 4/02, H01M 4/36, H01M 4/505, H01M 4/583, H01M 4/58

(54) **POSITIVE ELECTRODE SHEET, SECONDARY BATTERY, BATTERY MODULE, BATTERY PACK, AND ELECTRIC DEVICE**
POSITIVELEKTRODENFOLIE, SEKUNDÄRBATTERIE, BATTERIEMODUL, BATTERIEPACK UND ELEKTRISCHE VORRICHTUNG
FEUILLE D'ÉLECTRODE POSITIVE, BATTERIE SECONDAIRE, MODULE DE BATTERIE, BLOC-BATTERIE ET DISPOSITIF ÉLECTRIQUE

(43) Date of publication of application: 22.11.2023
(60) Divisional application: 26161110.7 / 4 783 266
(73) Proprietor: Contemporary Amperex Technology (Hong Kong) Limited, Central, Central And Western District (HK)
(72) Inventor: JI, Cheng, Ningde City, Fujian 352100 (CN); LI, Baiqing, Ningde City, Fujian 352100 (CN)
(74) Representative: Holt, Lucy Rose
(86) International application number: PCT/CN2022/084258
(87) International publication number: WO 2023/184294

(56) References cited:
- CN-A- 101 339 994
- CN-A- 104 577 115
- CN-A- 105 810 897
- CN-A- 110 265 627
- CN-B- 101 339 994
- JP-A- 2002 198 050
- JP-A- 2021 009 838
- JP-A- 2021 009 838
- US-A1- 2016 190 584
- ZHAO DE ET AL: "Synthesis of B Doped Li1+2xMn0.8Fe0.2P1-xBxO4 as Cathode Material for Lithium Ion BatteryChinese", JOURNAL OF THE CHINESE CERMAIC SOCIETY, 1 January 2017 (2017-01-01), DOI:10.14062/j.issn.0454-5648.2017.01.01, XP093135988, Retrieved from the Internet <URL:https://www.cnki.net/kcms/doi/10.14062/j.issn.0454-5648.2017.01.01.html> [retrieved on 20240228]

## Description

### Technical Field

The present application relates to the technical field of secondary batteries, and in particular to a positive electrode plate, a secondary battery, a battery module, a battery pack and a power consuming device.

### Background Art

In recent years, with the increasing application range of secondary batteries, secondary batteries are widely used in energy storage power systems such as hydroelectric, thermal, wind and solar power stations, as well as electric tools, electric bicycles, electric motorcycles, electric vehicles, military equipment, aerospace and other fields. Due to the great development of secondary batteries, higher requirements have also been placed on the secondary batteries in terms of energy density, cycling performance, safety performance, etc. The existing lithium iron manganese phosphate makes the secondary battery have poor dynamic performance and cell performance rate, which can not meet the requirements of the power battery. The existing secondary battery made of lithium iron phosphate as positive electrode active material has excellent cycle stability and safety. However, the existence of one-dimensional lithium ion channels therein and the existence of two phases of LiFePO₄ and FePO₄ during the charge and discharge process make the internal phase change resistance of the material increase during charge and discharge process, resulting in poor dynamic performance and cell performance rate, short low-temperature cycle life and low low-temperature capacity retention rate.

### Summary of the Invention

The present application is made in view of the above-mentioned problems, and the object thereof is to provide a positive electrode plate, a secondary battery, a battery module, a battery pack, and a power consuming device, so as to solve the problems of low energy density, poor dynamic performance and low performance rate, short low-temperature cycle life and low low-temperature cycle capacity retention rate of the secondary battery made of the existing positive electrode active materials.

In order to achieve the above object, a first aspect of the present application provides a positive electrode plate, comprising a positive electrode current collector and a positive electrode film layer provided on at least one surface of the positive electrode current collector, wherein the positive electrode film layer has a single-layer structure or a multi-layer structure; when the positive electrode film layer has a single-layer structure, at least one of the positive electrode film layers contains both a first positive electrode active material with a chemical formula of LiₐAₓMn_{1-y}R_{y}P_{1-z}C_{z}O₄₋ₙDₙ and a second positive electrode active material; and/or when the positive electrode film layer has a multi-layer structure, at least one of the positive electrode film layers contains both a first positive electrode active material with a chemical formula of LiₐAₓMn_{1-y}R_{y}P_{1-z}C_{z}O₄₋ₙDₙ and a second positive electrode active material; wherein A includes one or more elements selected from Zn, Al, Na, K, Mg, Nb, Mo and W; R includes one or more elements selected from Ti, V, Zr, Fe, Ni, Mg, Co, Ga, Sn, Sb, Nb and Ge; C includes one or more elements selected from B, S, Si and N; D includes one or more elements selected from S, F, Cl and Br; a is selected from the range of 0.9 to 1.1, x is selected from the range of 0.001 to 0.1, y is selected from the range of 0.001 to 0.5, z is selected from the range of 0.001 to 0.1, and n is selected from range of 0.001 to 0.1; the second positive electrode active material is selected from one or more of LiFePO₄, carbon-coated LiFePO₄, LiFe_{b}M_{c}PO₄ and carbon-coated LiFe_{b}M_{c}PO₄, wherein M independently includes one or more elements selected from Ti, Zn, Co, Mn, La, V, Mg, Al, Nb, W, Zr, Nb, Sm, Cr, Cu and B, b is independently selected from the range of 0.99 to 0.999 and b + c = 1.

Thus, the applicant unexpectedly found that: by doping specific elements at the positions of Li, Mn, P and O of the compound LiMnPO₄ in a specific amount at the same time to obtain a first positive electrode active material, the performance rate can be significantly improved, and meanwhile the dissolution of Mn and the doping elements at Mn position can be significantly reduced, such that the cycling performance and/or high-temperature stability can be significantly improved, and the gram capacity and compacted density of the material can also be improved, and the interfacial side reactions can be reduced.

In the present application, by the combination use of the first positive electrode active material and the second positive electrode active material, the advantages of the two materials are complementary, which improves the energy density of the secondary battery, and meanwhile allows the secondary battery to have excellent dynamic performance, performance rate, low-temperature cycle life and low-temperature cycle capacity retention rate.

A second aspect of the present application further provides a positive electrode plate, comprising a positive electrode current collector and a positive electrode film layer provided on at least one surface of the positive electrode current collector, wherein at least one of the positive electrode film layers has a multi-layer structure, and any one of the positive electrode film layers having a multi-layer structure respectively contains a first positive electrode active material with a chemical formula of LiₐAₓMn_{1-y}R_{y}P_{1-z}C_{z}O₄₋ₙDₙ and a second positive electrode active material in different layers; wherein A includes one or more elements selected from Zn, Al, Na, K, Mg, Nb, Mo and W; R includes one or more elements selected from Ti, V, Zr, Fe, Ni, Mg, Co, Ga, Sn, Sb, Nb and Ge; C includes one or more elements selected from B, S, Si and N; D includes one or more elements selected from S, F, Cl and Br; a is selected from the range of 0.9 to 1.1, x is selected from the range of 0.001 to 0.1, y is selected from the range of 0.001 to 0.5, z is selected from the range of 0.001 to 0.1, and n is selected from range of 0.001 to 0.1; the second positive electrode active material is selected from one or more of LiFePO₄, carbon-coated LiFePO₄, LiFe_{b}M_{c}PO₄ and carbon-coated LiFe_{b}M_{c}PO₄, wherein M independently includes one or more elements selected from Ti, Zn, Co, Mn, La, V, Mg, Al, Nb, W, Zr, Nb, Sm, Cr, Cu and B, b is independently selected from the range of 0.99 to 0.999 and b + c = 1; optionally, any one of the positive electrode film layers having a multi-layer structure respectively contains the first positive electrode active material and the second positive electrode active material in adjacent layers.

Thus, the first positive electrode active material has significantly improved performance rate and meanwhile significantly reduces the dissolution of Mn and the doping elements at Mn position, such that the cycling performance and/or high-temperature stability can be significantly improved, and the gram capacity and compacted density of the material can also be improved, and the interfacial side reactions can be reduced.

In the present application, by the combination use of the first positive electrode active material and the second positive electrode active material, the advantages of the two materials are complementary, which improves the energy density of the secondary battery, and meanwhile allows the secondary battery to have excellent performance rate, dynamic performance, low-temperature cycle life and low-temperature cycle capacity retention rate.

A third aspect of the present application provides a positive electrode plate, comprising a positive electrode current collector and a positive electrode film layer A and a positive electrode film layer B respectively provided on both surfaces of the positive electrode current collector; wherein the positive electrode film layer A and the positive electrode film layer B independently have a single-layer structure or a multi-layer structure; at least one of the positive electrode film layers A contains a first positive electrode active material with a chemical formula of LiₐAₓMn_{1-y}R_{y}P_{1-z}C_{z}O₄₋ₙDₙ, and at least one of the positive electrode film layers B contains a second positive electrode active material; wherein A includes one or more elements selected from Zn, Al, Na, K, Mg, Nb, Mo and W; R includes one or more elements selected from Ti, V, Zr, Fe, Ni, Mg, Co, Ga, Sn, Sb, Nb and Ge; C includes one or more elements selected from B, S, Si and N; D includes one or more elements selected from S, F, Cl and Br; a is selected from the range of 0.9 to 1.1, x is selected from the range of 0.001 to 0.1, y is selected from the range of 0.001 to 0.5, z is selected from the range of 0.001 to 0.1, and n is selected from range of 0.001 to 0.1; the second positive electrode active material is selected from one or more of LiFePO₄, carbon-coated LiFePO₄, LiFe_{b}M_{c}PO₄ and carbon-coated LiFe_{b}M_{c}PO₄, wherein M independently includes one or more elements selected from Ti, Zn, Co, Mn, La, V, Mg, Al, Nb, W, Zr, Nb, Sm, Cr, Cu and B, b is independently selected from the range of 0.99 to 0.999 and b + c = 1.

Thus, the first positive electrode active material has significantly improved performance rate and meanwhile significantly reduces the dissolution of Mn and the doping elements at Mn position, such that the cycling performance and/or high-temperature stability can be significantly improved, and the gram capacity and compacted density of the material can also be improved, and the interfacial side reactions can be reduced.

In the present application, by use of the combination of the first positive electrode active material and the second positive electrode active material, the advantages of the two materials are complementary, which improves the energy density of the secondary battery, and meanwhile allows the secondary battery to have excellent performance rate, dynamic performance, low-temperature cycle life and low-temperature cycle capacity retention rate.

Unless otherwise specified, in the chemical formula of LiₐAₓMn_{1-y}R_{y}P_{1-z}C_{z}O₄₋ₙDₙ, when A is two or more elements, the above-mentioned limitation on the numerical range of x is not only a limitation on the stoichiometric number of each element as A, but also a limitation on the sum of the stoichiometric numbers of each element as A. For example, when A is two or more elements A1, A2...An, the respective stoichiometric numbers x1, x2...xn of A1, A2...An fall within the numerical range of x defined in the present application, and the sum of x1, x2...xn also falls within this numerical range. Similarly, for the case where R, C and D is two or more elements, the limitations on the numerical ranges of the stoichiometric numbers of R, C and D in the present application also have the above meanings.

Unless otherwise specified, in the chemical formula of LiFe_{b}M_{c}PO₄, when M is two or more elements, the above-mentioned limitation on the numerical range of c is not only a limitation on the stoichiometric number of each element as M, but also a limitation on the sum of the stoichiometric numbers of each element as M. For example, when M is two or more elements M1, M2...Mn, the respective stoichiometric numbers c1, c2...cn of M1, M2...Mn fall within the numerical range c defined in the present application, and the sum of c1, c2...cn also falls within this numerical range.

In any embodiment of the first aspect to the third aspect, in the second positive electrode active material, the mass of carbon accounts for 0.1%-4% of the mass of carbon-coated LiFePO₄; and/or the mass of carbon accounts for 0.1%-4% of the mass of the carbon-coated LiFe_{b}M_{c}PO₄. The use of the second positive electrode active material with the above carbon mass content can further ensure that the secondary battery has excellent performance rate, dynamic performance and low-temperature cycling performance, and has high energy density.

In any embodiment of the first aspect to the third aspect, the mass ratio of the first positive electrode active material to the second positive electrode active material is 1 : 7 to 7 : 1, and optionally 1 : 4 to 4 : 1. In this way, it is ensured that the secondary battery has high energy density, excellent dynamic performance, excellent performance rate, long low-temperature cycle life and high low-temperature cycle capacity retention rate, and the interface side reactions are reduced.

In any embodiment of the first aspect to the third aspect, in the first positive electrode active material, R is at least two elements selected from Ti, V, Zr, Fe, Ni, Mg, Co, Ga, Sn, Sb, Nb and Ge. Thus, the composition of the first positive electrode active material can be more accurately controlled.

In any embodiment of the first aspect to the third aspect, in the first positive electrode active material, A is any element selected from Mg and Nb; and/or R is at least two elements selected from Fe, Ti, V, Co and Mg, optionally is Fe and one or more elements selected from Ti, V, Co and Mg; and/or C is S; and/or D is F. By selecting the doping elements within the above range, the performance rate and electronic conductivity of the secondary battery can be further improved, so that the performance rate, gram capacity and high-temperature performance of the secondary battery can be improved and the interfacial side reactions can be alleviated.

In any embodiment of the first aspect to the third aspect, in the first positive electrode active material, x is selected from the range of 0.001 to 0.005. By selecting the value of x within this range, the dynamic performance of the first positive electrode active material can be further improved.

In any embodiment of the first aspect to the third aspect, in the first positive electrode active material, y is selected from the range of 0.01 to 0.5, and optionally selected from the range of 0.25 to 0.5. By selecting the value of y within this range, the gram capacity and performance rate of the first positive electrode active material can be further improved.

In any embodiment of the first aspect to the third aspect, in the first positive electrode active material, z is selected from the range of 0.001 to 0.005. By selecting the value of z within this range, the performance rate of the secondary battery can be further improved.

In any embodiment of the first aspect to the third aspect, in the first positive electrode active material, n is selected from the range of 0.001 to 0.005. By selecting the value of n within this range, the high-temperature performance of the secondary battery can be further improved.

In any embodiment of the first aspect to the third aspect, in the first positive electrode active material, the ratio of (1-y) to y is selected from 1 to 4, and optionally selected from 1.5 to 3. In this way, the energy density and cycling performance of the secondary battery can be further improved.

In any embodiment of the first aspect to the third aspect, in the first positive electrode active material, the ratio of a to x is selected from 9 to 1100, and optionally selected from 190 to 998. When this condition is satisfied, the energy density and cycling performance of the secondary battery can be further improved.

In any embodiment of the first aspect to the third aspect, the lattice change rate of the first positive electrode active material is less than 8%, and optionally less than 4%. By reducing the lattice change rate, it is beneficial to improve the performance rate of the secondary battery. The lattice change rate is determined by X-ray diffraction (XRD).

In any embodiment of the first aspect to the third aspect, the Li/Mn antisite defect concentration of the first positive electrode active material is less than 2%, and optionally less than 0.5%. The so-called Li/Mn antisite defect means that the positions of Li⁺ and Mn²⁺ have been exchanged in the LiMnPO₄ lattices. The Li/Mn antisite defect concentration refers to the percentage of Li⁺ exchanged with Mn²⁺ based on the total amount of Li⁺ in the positive electrode active material. By reducing the Li/Mn antisite defect concentration, it is beneficial to improve the gram capacity and performance rate of the first positive electrode active material. The Li/Mn antisite defect concentration can be determined by a method known in the art, e.g., XRD.

In any embodiment of the first aspect to the third aspect, the surface oxygen valence state of the first positive electrode active material is less than -1.82, and optionally -1.89 to -1.98. By reducing the surface oxygen valence state, the interfacial side reactions between the first positive electrode active material and the electrolyte solution can be alleviated, thereby improving the cycling performance and high-temperature stability of the secondary battery. The surface oxygen valence state can be determined by a method known in the art, e.g., electron energy loss spectroscopy (EELS).

In any embodiment of the first aspect to the third aspect, the compacted density of the first positive electrode active material at 3T is greater than 2.0 g/cm³, and optionally greater than 2.2 g/cm³. The higher the compacted density, the greater the weight of the first positive electrode active material per unit volume, thus increasing the compacted density is beneficial to improve the volumetric energy density of the cell. The compacted density is determined in accordance with GB/T 24533-2009.

In any embodiment of the first aspect to the third aspect, the surface of the first positive electrode active material is further coated with carbon. Thus, the conductivity of the first positive electrode active material can be improved.

In any embodiment of the first aspect to the third aspect, the sum of the mass of the first positive electrode active material and the second positive electrode active material accounts for 88%-98.7% of the mass of the positive electrode plate. In this way, it is further ensured that the secondary battery has excellent performance rate, dynamic performance and low-temperature cycling performance, and has high energy density.

A fourth aspect of the present application provides a secondary battery, comprising the positive electrode plate according to the first aspect to the third aspect of the present application.

A fifth aspect of the present application provides a battery module, comprising the secondary battery of the fourth aspect of the present application.

A sixth aspect of the present application provides a battery pack, comprising the battery module of the fifth aspect of the present application.

A seventh aspect of the present application provides a power consuming device, comprising at least one selected from the secondary battery of the fourth aspect of the present application, the battery module of the fifth aspect of the present application and the battery pack of the sixth aspect of the present application.

### Brief Description of the Drawings

Fig. 1 is a schematic diagram of a secondary battery according to an embodiment of the present application.
Fig. 2 is an exploded view of a secondary battery according to an embodiment of the present application as shown in Fig.1.
Fig. 3 is a schematic diagram of a battery module according to an embodiment of the present application.
Fig. 4 is a schematic diagram of a battery pack according to an embodiment of the present application.
Fig. 5 is an exploded view of a battery pack according to an embodiment of the present application as shown in Fig. 4.
Fig. 6 is a schematic diagram of a power consuming device using a secondary battery according to an embodiment of the present application as a power source.
Fig. 7 is a schematic diagram of the structure of a battery made of the positive electrode plate P1 of the present application.
Fig. 8 is a schematic diagram of the structure of a battery made of the positive electrode plate P2 of the present application.
Fig. 9 is a schematic diagram of the structure of a battery made of the positive electrode plate P3 of the present application.
Fig. 10 is a schematic diagram of the structure of a battery made of the positive electrode plate P8 of the present application.
Fig. 11 is a schematic diagram of the structure of a battery made of the positive electrode plate P10 of the present application.
Fig. 12 is a schematic diagram of the structure of a battery made of the positive electrode plate P11 of the present application.
Fig. 13 is a schematic diagram of the structure of a battery made of the positive electrode plate P12 of the present application.
Fig. 14 is a schematic diagram of the structure of a battery made of the positive electrode plate P17 of the present application.
Fig. 15 is a schematic diagram of the structure of a battery made of the positive electrode plate P18 of the present application.
Fig. 16 is a schematic diagram of the structure of a battery made of the positive electrode plate P23 of the present application.
Fig. 17 is a schematic diagram of the structure of a battery made of the positive electrode plate P24 of the present application.
Fig. 18 is a schematic diagram of the structure of a battery made of the positive electrode plate P26 of the present application.
Fig. 19 is a schematic diagram of the structure of a battery made of the positive electrode plate P27 of the present application.

### List of reference signs:

1 battery pack; 2 upper box body; 3 lower box body; 4 battery module; 5 secondary battery; 51 housing; 52 electrode assembly; 53 top cover assembly.

### Detailed Description of Embodiments

Hereinafter, the embodiments of the positive electrode plate, secondary battery, battery module, battery pack and power consuming device of the present application are specifically disclosed in the detailed description with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of ≥ 2, it is equivalent to disclosing that the parameter is, for example, an integer of 2, 3, 4, 5, 6, 7, 8, 9, 10, 11, 12, and the like.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application can be carried out sequentially or randomly, preferably sequentially. For example, the method including steps (a) and (b) indicates that the method may include steps (a) and (b) carried out sequentially, and may also include steps (b) and (a) carried out sequentially. For example, reference to "the method may further include step (c)" indicates that step (c) may be added to the method in any order, e.g., the method may include steps (a), (b) and (c), steps (a), (c) and (b), or steps (c), (a) and (b).

The terms "comprise" and "include" mentioned in the present application are openended or closed-ended, unless otherwise stated. For example, "comprise" and "include" mean that other components not listed may further be comprised or included, or only the listed components may be comprised or included.

In the present application, the term "or" is inclusive unless otherwise specified. For example, the phrase "A or B" means "A, B, or both A and B". More specifically, a condition "A or B" is satisfied by any one of the following: A is true (or present) and B is false (or not present); A is false (or not present) and B is true (or present); or both A and B are true (or present).

### [Secondary battery]

A secondary battery, also known as a rechargeable battery or an accumulator, refers to a battery of which active materials can be activated by means of charging for reuse of the battery after the battery is discharged.

Generally, the secondary battery comprises a positive electrode plate, a negative electrode plate, a separator and an electrolyte solution. During the charge/discharge process of the battery, active ions (e.g., lithium ions) are intercalated and de-intercalated back and forth between the positive electrode plate and the negative electrode plate. The separator is provided between the positive electrode plate and the negative electrode plate, and mainly prevents the positive and negative electrodes from short-circuiting and enables the active ions to pass through. The electrolyte solution mainly functions for conducting the active ions between the positive electrode plate and the negative electrode plate.

### [Positive electrode plate]

An embodiment of the first aspect of the present application provides a positive electrode plate, comprising a positive electrode current collector and a positive electrode film layer provided on at least one surface of the positive electrode current collector, wherein the positive electrode film layer has a single-layer structure or a multi-layer structure; when the positive electrode film layer has a single-layer structure, at least one of the positive electrode film layers contains both a first positive electrode active material with a chemical formula of LiₐAₓMn_{1-y}R_{y}P_{1-z}C_{z}O₄₋ₙDₙ and a second positive electrode active material; and/or when the positive electrode film layer has a multi-layer structure, at least one of the positive electrode film layers contains both a first positive electrode active material with a chemical formula of LiₐAₓMn_{1-y}R_{y}P_{1-z}C_{z}O₄₋ₙDₙ and a second positive electrode active material; wherein A includes one or more elements selected from Zn, Al, Na, K, Mg, Nb, Mo and W; R includes one or more elements selected from Ti, V, Zr, Fe, Ni, Mg, Co, Ga, Sn, Sb, Nb and Ge; C includes one or more elements selected from B, S, Si and N; D includes one or more elements selected from S, F, Cl and Br; a is selected from the range of 0.9 to 1.1, x is selected from the range of 0.001 to 0.1, y is selected from the range of 0.001 to 0.5, z is selected from the range of 0.001 to 0.1, and n is selected from range of 0.001 to 0.1; the second positive electrode active material is selected from one or more of LiFePO₄, carbon-coated LiFePO₄, LiFe_{b}M_{c}PO₄ and carbon-coated LiFe_{b}M_{c}PO₄, wherein M independently includes one or more elements selected from Ti, Zn, Co, Mn, La, V, Mg, Al, Nb, W, Zr, Nb, Sm, Cr, Cu and B, b is independently selected from the range of 0.99 to 0.999 and b + c = 1.

It should be noted that: when the positive electrode plate comprises two positive electrode film layers, the expression "positive electrode film layer has a single-layer structure or multi-layer structure" means that each of the two positive electrode film layers independently has a single-layer structure or multi-layer structure; "when the positive electrode film layer has a single-layer structure " means that one or two positive electrode film layers have a single-layer structure; "when the positive electrode film layer has a multi-layer structure" means that one or two positive electrode film layers have a multi-layer structure.

The first positive electrode active material of the present application is obtained by doping elements in the compound LiMnPO₄, wherein A, R, C and D are elements doped at the positions of Li, Mn, P and O of the compound LiMnPO₄, respectively. Without wishing to be bound by theory, the inventors of the present application found that the performance improvement of lithium manganese phosphate is related to the decrease of the lattice change rate of lithium manganese phosphate during lithium de-intercalation and the decrease of the surface activity. A reduction in the lattice change rate can reduce the difference of lattice constants between the two phases at the grain boundary, lower the interface stress and enhance the Li⁺ transport ability at the interface, thereby improving the performance rate of the positive electrode active material. However, high surface activity can easily lead to serious interface side reactions, aggravate gas production, electrolyte solution consumption and interface damage, thereby affecting the cycling performance of the secondary battery. In the present application, the lattice change rate is reduced by doping at the positions of Li and Mn. The Mn-position doping also effectively decreases the surface activity, thereby inhibiting the dissolution of Mn and the interfacial side reactions between the positive electrode active material and the electrolyte solution. The P-site doping increases the change rate of the Mn-O bond length and reduces the small-polaron migration barrier of the material, which is beneficial for electronic conductivity. The O-position doping plays a good role in reducing the interfacial side reactions. The P-position and O-position doping also has an effect on the dissolution of Mn of antisite defects and the dynamic performance. Therefore, the doping reduces the antisite defect concentration in the material, improves the dynamic performance and gram capacity of the material, and can also change the morphology of the particles, thereby increasing the compacted density. The applicant has unexpectedly found that: by doping specific elements at the positions of Li, Mn, P and O of the compound LiMnPO₄ in a specific amount at the same time, the performance rate can be significantly improved, and meanwhile the dissolution of Mn and the doping elements at Mn position can be significantly reduced, such that the cycling performance and/or high-temperature stability can be significantly improved, and the gram capacity and compacted density of the material can also be improved. In addition, in the present application, by the combination use of the first positive electrode active material and the second positive electrode active material, the advantages of the two materials are complementary, which improves the energy density of the secondary battery; and the first positive electrode active material is uniformly dispersed around the second positive electrode active material, and the doping on the positions of Li, P, and Mn of the first positive electrode active material can further reduce the lattice change rate during lithium de-intercalation process and improve the electronic conductivity, so that the conductivity and the rate of lithium de-intercalation of the materials used in combination can be thoroughly improved, thereby improving the energy density of the secondary battery and allowing the materials used in combination have excellent power performance and low-temperature performance. Moreover, due to the O-position doping of the first positive electrode active material, the interfacial side reactions are reduced, which allows to achieve good cycle stability and will not deteriorate the cycling performance. The stable skeleton structure of the second material is beneficial to improve the stability of the first positive electrode material in the materials used in combination, thereby allowing the secondary battery to have excellent cycling performance.

In some embodiments of the first aspect, a positive electrode film layer C and a positive electrode film layer D are respectively provided on both surfaces of the positive electrode current collector, wherein the positive electrode film layer C has a multi-layer structure, and the positive electrode film layer D has a single-layer structure, at least one of the positive electrode film layers C contains both a first positive electrode active material and a second positive electrode active material; optionally, the positive electrode film layer D contains either or both of the first positive electrode active material and the second positive electrode active material; and optionally, the remaining layers of the positive electrode film layer C contain the first positive electrode active material or the second positive electrode active material.

In some embodiments of the first aspect, a positive electrode film layer C and a positive electrode film layer D are respectively provided on both surfaces of the positive electrode current collector, wherein the positive electrode film layer C has a multi-layer structure, and the positive electrode film layer D has a single-layer structure, the positive electrode film layer D contains both a first positive electrode active material and a second positive electrode active material; optionally, any one of the positive electrode film layers C contains the first positive electrode active material or the second positive electrode active material.

In some embodiments of the first aspect, a positive electrode film layer is respectively provided on both surfaces of the positive electrode current collector, each of the positive electrode film layers has a multi-layer structure, and at least one of the positive electrode film layers contains both a first positive electrode active material and a second positive electrode active material; and optionally, the remaining layers of the positive electrode film layer contain the first positive electrode active material or the second positive electrode active material.

An embodiment of the second aspect of the present application provides a positive electrode plate, comprising a positive electrode current collector and a positive electrode film layer provided on at least one surface of the positive electrode current collector, wherein at least one of the positive electrode film layers has a multi-layer structure, and any one of the positive electrode film layers having a multi-layer structure respectively contains a first positive electrode active material with a chemical formula of LiₐAₓMn_{1-y}R_{y}P_{1-z}C_{z}O₄₋ₙDₙ and a second positive electrode active material in different layers; wherein A includes one or more elements selected from Zn, Al, Na, K, Mg, Nb, Mo and W; R includes one or more elements selected from Ti, V, Zr, Fe, Ni, Mg, Co, Ga, Sn, Sb, Nb and Ge; C includes one or more elements selected from B, S, Si and N; D includes one or more elements selected from S, F, Cl and Br; a is selected from the range of 0.9 to 1.1, x is selected from the range of 0.001 to 0.1, y is selected from the range of 0.001 to 0.5, z is selected from the range of 0.001 to 0.1, and n is selected from range of 0.001 to 0.1; the second positive electrode active material is selected from one or more of LiFePO₄, carbon-coated LiFePO₄, LiFe_{b}M_{c}PO₄ and carbon-coated LiFe_{b}M_{c}PO₄, wherein M independently includes one or more elements selected from Ti, Zn, Co, Mn, La, V, Mg, Al, Nb, W, Zr, Nb, Sm, Cr, Cu and B, b is independently selected from the range of 0.99 to 0.999 and b + c = 1; optionally, any one of the positive electrode film layers having a multi-layer structure respectively contains the first positive electrode active material and the second positive electrode active material in adjacent layers.

In some embodiments of the second aspect, a positive electrode film layer is respectively provided on both surfaces of the positive electrode current collector, each of the positive electrode film layers has a multi-layer structure, and the adjacent two layers of the positive electrode film layer respectively contain the first positive electrode active material and the second positive electrode active material.

In some embodiments of the second aspect, a positive electrode film layer E and a positive electrode film layer F are respectively provided on both surfaces of the positive electrode current collector, wherein the positive electrode film layer E has a multi-layer structure, and the positive electrode film layer F has a single-layer structure, and the adjacent two layers of the positive electrode film layer E respectively contain a first positive electrode active material and a second positive electrode active material; and optionally, the remaining layers of the positive electrode film layer E and the positive electrode film layer F contain the first positive electrode active material or the second positive electrode active material.

An embodiment of the third aspect of the present application provides a positive electrode plate, comprising a positive electrode current collector and a positive electrode film layer A and a positive electrode film layer B respectively provided on both surfaces of the positive electrode current collector; wherein the positive electrode film layer A and the positive electrode film layer B independently has a single-layer structure or a multi-layer structure; at least one of the positive electrode film layers A contains a first positive electrode active material with a chemical formula of LiₐAₓMn_{1-y}R_{y}P_{1-z}C_{z}O₄₋ₙDₙ, and at least one of the positive electrode film layers B contains a second positive electrode active material; wherein A includes one or more elements selected from Zn, Al, Na, K, Mg, Nb, Mo and W; R includes one or more elements selected from Ti, V, Zr, Fe, Ni, Mg, Co, Ga, Sn, Sb, Nb and Ge; C includes one or more elements selected from B, S, Si and N; D includes one or more elements selected from S, F, Cl and Br; a is selected from the range of 0.9 to 1.1, x is selected from the range of 0.001 to 0.1, y is selected from the range of 0.001 to 0.5, z is selected from the range of 0.001 to 0.1, and n is selected from range of 0.001 to 0.1; the second positive electrode active material is selected from one or more of LiFePO₄, carbon-coated LiFePO₄, LiFe_{b}M_{c}PO₄ and carbon-coated LiFe_{b}M_{c}PO₄, wherein M independently includes one or more elements selected from Ti, Zn, Co, Mn, La, V, Mg, Al, Nb, W, Zr, Nb, Sm, Cr, Cu and B, b is independently selected from the range of 0.99 to 0.999 and b + c = 1.

In an embodiment of the second or third aspect of the present application, the first positive electrode active material has significantly improved performance rate and meanwhile significantly reduces the dissolution of Mn and the doping elements at Mn position, such that the cycling performance and/or high-temperature stability can be significantly improved, and the gram capacity and compacted density of the material can also be improved, and the interfacial side reactions can be reduced, and the specific principle is the same as that in the first embodiment of the present application. Although the mechanism is not very clear, in the present application, by the combination use of the first positive electrode active material and the second positive electrode active material, the advantages of the two materials are complementary, which improves the energy density of the secondary battery, and meanwhile allows the secondary battery to have excellent performance rate, dynamic performance, low-temperature cycle life and low-temperature cycle capacity retention rate. Specifically, the first positive electrode active material is uniformly dispersed around the second positive electrode active material, and the doping on the positions of Li, P, and Mn of the first positive electrode active material can further reduce the lattice change rate during lithium de-intercalation process and improve the electronic conductivity, so that the conductivity and the rate of lithium de-intercalation of the materials used in combination can be thoroughly improved, thereby improving the energy density of the secondary battery and allowing the materials used in combination have excellent power performance and low-temperature performance. Moreover, due to the O-position doping of the first positive electrode active material, the interfacial side reactions are reduced, which allows to achieve good cycle stability and will not deteriorate the cycling performance. The stable skeleton structure of the second material is beneficial to improve the stability of the first positive electrode material in the materials used in combination, thereby allowing the secondary battery to have excellent cycling performance.

Unless otherwise specified, in the chemical formula of LiₐAₓMn_{1-y}R_{y}P_{1-z}C_{z}O₄₋ₙDₙ, when A is two or more elements, the above-mentioned limitation on the numerical range of x is not only a limitation on the stoichiometric number of each element as A, but also a limitation on the sum of the stoichiometric numbers of each element as A. For example, when A is two or more elements A1, A2...An, the respective stoichiometric numbers x1, x2...xn of A1, A2...An fall within the numerical range of x defined in the present application, and the sum of x1, x2...xn also falls within this numerical range. Similarly, for the case where R, C and D is two or more elements, the limitations on the numerical ranges of the stoichiometric numbers of R, C and D in the present application also have the above meanings.

Unless otherwise specified, in the chemical formula of LiFe_{b}M_{c}PO₄, when M is two or more elements, the above-mentioned limitation on the numerical range of c is not only a limitation on the stoichiometric number of each element as M, but also a limitation on the sum of the stoichiometric numbers of each element as M. For example, when M is two or more elements M1, M2...Mn, the respective stoichiometric numbers c1, c2...cn of M1, M2...Mn fall within the numerical range c defined in the present application, and the sum of c1, c2...cn also falls within this numerical range.

In some embodiments of the first to third aspects, the first positive electrode active material of LiₐAₓMn_{1-y}R_{y}P_{1-z}C_{z}O₄₋ₙDₙ thoroughly keeps electrically neutral.

In some embodiments of the first to third aspects, LiFe_{b}M_{c}PO₄ thoroughly keeps electrically neutral.

In some embodiments of the first aspect to the third aspect, in the second positive electrode active material, the mass of carbon accounts for 0.1%-4% of the mass of carbon-coated LiFePO₄; and/or the mass of carbon accounts for 0.1%-4% of the mass of the carbon-coated LiFe_{b}M_{c}PO₄. The use of the second positive electrode active material with the above carbon mass content can further ensure that the secondary battery has excellent performance rate, dynamic performance and low-temperature cycling performance, and has high energy density.

In some embodiments of the first to third aspects, the mass ratio of the first active material to the second active material is 1 : 7 to 7 : 1, optionally 1 : 4 to 4 : 1, and further optionally 1 : 3 to 3 : 1, such as 1 : 7, 1 : 5, 1 : 3, 1 : 2, 3 : 5, 1 : 1, 5 : 3, 2 : 1, 3 : 1, 5 : 1, or 7 : 1. In this way, it is ensured that the secondary battery has high energy density, excellent dynamic performance, excellent performance rate, long low-temperature cycle life and high low-temperature cycle capacity retention rate, and the interface side reaction is reduced.

In some embodiments of the first to third aspects, in the first positive electrode active material, R is at least two elements selected from Ti, V, Zr, Fe, Ni, Mg, Co, Ga, Sn, Sb, Nb and Ge. Thus, the composition of the first positive electrode active material can be more easily and accurately controlled.

In some embodiments of the first to third aspects, in the first positive electrode active material, A is any element selected from Mg and Nb. and/or R is at least two elements selected from Fe, Ti, V, Co and Mg, optionally is Fe and one or more elements selected from Ti, V, Co and Mg; and/or C is S; and/or D is F. By selecting Li-position doping elements within the above range, the lattice change rate during lithium de-intercalation process can be further reduced, thereby further improving the performance rate of the secondary battery. By selecting Mn-position doping elements within the above range, the electronic conductivity can be further improved and the lattice change rate can be further reduced, thereby improving the performance rate and gram capacity of the secondary battery. By selecting P-position doping elements within the above range, the performance rate of the secondary battery can be further improved. By selecting O-position doping elements within the above range, the interfacial side reactions can be further alleviated, thereby improving the high-temperature performance of the secondary battery.

In some embodiments of the first to third aspects, in the first positive electrode active material, x is selected from the range of 0.001 to 0.005. By selecting the value of x within this range, the dynamic performance of the first positive electrode active material can be further improved.

In some embodiments of the first to third aspects, in the first positive electrode active material, y is selected from the range of 0.01 to 0.5, and optionally selected from the range of 0.25 to 0.5. By selecting the value of y within this range, the gram capacity and performance rate of the first positive electrode active material can be further improved.

In some embodiments of the first to third aspects, in the first positive electrode active material, z is selected from the range of 0.001 to 0.005. By selecting the value of z within this range, the performance rate of the secondary battery can be further improved.

In some embodiments of the first to third aspects, in the first positive electrode active material, n is selected from the range of 0.001 to 0.005. By selecting the value of n within this range, the high-temperature performance of the secondary battery can be further improved.

In some embodiments of the first to third aspects, in the first positive electrode active material, the ratio of (1-y) to y is selected from 1 to 4, and optionally selected from 1.5 to 3, and the ratio of a to x is selected from 9 to 1100, and optionally selected from 190 to 998. When this condition is satisfied, the energy density and cycling performance of the secondary battery can be further improved.

In some embodiments of the first to third aspects, the lattice change rate of the first positive electrode active material is less than 8%, and optionally less than 4%. By lowering the lattice change rate, the Li ion transport can be made easier, that is, the Li ions have a stronger migration ability in the material, which is beneficial to improve the performance rate of the secondary battery. The lattice change rate can be determined by a method known in the art, e.g., X-ray diffraction (XRD).

In some embodiments of the first to third aspects, the Li/Mn antisite defect concentration of the first positive electrode active material is less than 2%, and optionally less than 0.5%. The so-called Li/Mn antisite defect means that the positions of Li⁺ and Mn²⁺ have been exchanged in the LiMnPO₄ lattices. The Li/Mn antisite defect concentration refers to the percentage of Li⁺ exchanged with Mn²⁺ based on the total amount of Li⁺ in the positive electrode active material. By reducing the Li/Mn antisite defect concentration, it is beneficial to improve the gram capacity and performance rate of the first positive electrode active material. The Li/Mn antisite defect concentration can be determined by a method known in the art, e.g., XRD.

In some embodiments of the first to third aspects, the surface oxygen valence state of the first positive electrode active material is less than -1.82, and optionally -1.89 to -1.98. By reducing the surface oxygen valence state, the interfacial side reactions between the first positive electrode active material and the electrolyte solution can be alleviated, thereby improving the cycling performance and high-temperature stability of the secondary battery. The surface oxygen valence state can be determined by a method known in the art, e.g., electron energy loss spectroscopy (EELS).

In some embodiments of the first to third aspects, the compacted density of the first positive electrode active material at 3T is greater than 2.0 g/cm³, and optionally greater than 2.2 g/cm³. The higher the compacted density, the greater the weight of the first positive electrode active material per unit volume, thus increasing the compacted density is beneficial to improve the volumetric energy density of the cell. The compacted density can be determined in accordance with GB/T 24533-2009.

In some embodiments of the first to third aspects, the surface of the first positive electrode active material is further coated with carbon. Thus, the conductivity of the first positive electrode active material can be improved.

In some embodiments of the first to third aspects, the sum of the mass of the first positive electrode active material and the second positive electrode active material accounts for 88%-98.7% of the mass of the positive electrode plate. In this way, it is further ensured that the secondary battery has excellent performance rate, dynamic performance and low-temperature cycling performance, and has high energy density.

In some embodiments of the first to third aspects, the positive electrode current collector has two surfaces opposite in its own thickness direction, and the positive electrode film layer is provided on either or both of the two opposite surfaces of the positive electrode current collector.

In some embodiments of the first to third aspects, the positive electrode current collector may be a metal foil or a composite current collector. For example, as a metal foil, an aluminum foil can be used. The composite current collector may comprise a polymer substrate and a metal layer formed on at least one surface of the polymer substrate. The composite current collector can be formed by forming a metal material (aluminum, an aluminum alloy, nickel, a nickel alloy, titanium, a titanium alloy, silver and a silver alloy, etc.) on a polymer substrate (such as polypropylene (PP), polyethylene terephthalate (PET), polybutylene terephthalate (PBT), polystyrene (PS), polyethylene (PE), etc.).

In some embodiments of the first to third aspects, the positive electrode film layer may further comprise other positive electrode active materials known in the art for secondary batteries. As an example, the positive electrode active material may include at least one of the following materials: lithium-containing phosphates of an olivine structure, lithium transition metal oxides, and their respective modified compounds. However, the present application is not limited to these materials, and other conventional materials that can be used as positive electrode active materials for secondary batteries can also be used. These positive electrode active materials may be used alone or in combination of two or more. Herein, examples of lithium transition metal oxides may include, but are not limited to, at least one of lithium nickel oxide (e.g. LiNiO₂), lithium manganese oxide (e.g. LiMnO₂ and LiMn₂O₄), lithium nickel cobalt oxide, lithium manganese cobalt oxide, lithium nickel manganese oxide and modified compounds thereof, etc. Examples of lithium-containing phosphate with olivine structure may include, but are not limited to, at least one of lithium manganese phosphate (e.g. LiMnPO₄), composite material of lithium manganese phosphate and carbon, lithium iron manganese phosphate, and composite material of lithium iron manganese phosphate and carbon.

In some embodiments of the first to third aspects, the positive electrode film layer further optionally comprise a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments of the first to third aspects, the positive electrode film layer further optionally comprise a conductive agent. As an example, the conductive agent may include at least one of superconducting carbon, acetylene black, carbon black, Ketjen black, carbon dots, carbon nanotubes, graphene, and carbon nanofibers.

In some embodiments of the first to third aspects, the first positive electrode active material with a chemical formula of LiₐAₓMn_{1-y}R_{y}P_{1-z}C_{z}O₄₋ₙDₙ is prepared by the following steps:
step (1): mixing a source of manganese, a source of element R, an acid and optionally a solvent to obtain a mixture; and
step (2): mixing the mixture with a source of lithium, a source of phosphorus, a source of element A, a source of element C, a source of element D and optionally a solvent, drying and sintering same to obtain a core material containing LiₐAₓMn_{1-y}R_{y}P_{1-z}C_{z}O₄₋ₙDₙ. The definitions of A, R, C, and D are as described above.

In some embodiments of the first to third aspects, in step (1), the mixing is carried out at 60°C-120°C; and/or, in step (1), the mixing is carried out by stirring at 200-800 rpm.

In some embodiments of the first to third aspects, in step (2), the mixing is carried out for 8-15 h.

In some embodiments of the first to third aspects, in step (2), the sintering is carried out at 600°C-900°C for 6-14 h.

In some embodiments of the first to third aspects, the source of element A is selected from one or more of the elemental form, oxides, phosphates, oxalates, carbonates and sulfates of element A; and/or
the source of element R is selected from one or more of the elemental form, oxides, phosphates, oxalates, carbonates and sulfates of element R; and/or
the source of element C is selected from one or more of sulfates, borates, nitrates and silicates of element C; and/or
the source of element D is selected from one or more of the elemental form and ammonium salt of element D.

In the present application, the source of manganese may be a manganese-containing substance known in the art that can be used to prepare lithium manganese phosphate. As an example, the source of manganese can be selected from one or more of elemental manganese, manganese dioxide, manganese phosphate, manganese oxalate and manganese carbonate.

In the present application, the acid can be selected from one or more of organic acids such as hydrochloric acid, sulfuric acid, nitric acid, phosphoric acid, silicic acid, and siliceous acid, and organic acids such as oxalic acid. In some embodiments, the acid is a dilute organic acid having a concentration of 60% by weight or less.

In the present application, the source of lithium may be a lithium-containing substance known in the art that can be used to prepare lithium manganese phosphate. As an example, the source of lithium is selected from one or more of lithium carbonate, lithium hydroxide, lithium phosphate and lithium dihydrogen phosphate.

In the present application, the source of phosphorus may be a phosphorus-containing substance known in the art that can be used to prepare lithium manganese phosphate. As an example, the source of phosphorus is selected from one or more of diammonium phosphate, ammonium dihydrogen phosphate, ammonium phosphate and phosphoric acid.

### [Negative electrode plate]

The negative electrode plate comprises a negative electrode current collector and a negative electrode film layer provided on at least one surface of the negative electrode current collector, wherein the negative electrode film layer comprises a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer substrate and a metal layer formed on at least one surface of the polymer substrate. The composite current collector can be formed by forming a metal material (copper, a copper alloy, nickel, a nickel alloy, titanium, a titanium alloy, silver and a silver alloy, etc.) on a polymer substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for secondary batteries. As an example, the negative electrode active material may include at least one of the following materials: artificial graphite, natural graphite, soft carbon, hard carbon, a silicon-based material, a tin-based material and lithium titanate, etc. The silicon-based material can be selected from at least one of elemental silicon, silicon oxides, silicon carbon composites, silicon nitrogen composites and silicon alloys. The tin-based material can be selected from at least one of elemental tin, tin oxides, and tin alloys. However, the present application is not limited to these materials, and other conventional materials that can be used as negative electrode active materials for batteries can also be used. These negative electrode active materials can be used alone or in combination of two or more.

In some embodiments, the negative electrode film layer further optionally comprise a binder. As an example, the binder can be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprise a conductive agent. As an example, the conductive agent can be selected from at least one of superconducting carbon, acetylene black, carbon black, Ketjen black, carbon dots, carbon nanotubes, graphene, and carbon nanofibers.

In some embodiments, the negative electrode film layer further optionally comprise other auxiliary agents, such as thickener (e.g. sodium carboxymethyl cellulose (CMC-Na)), etc.

In some embodiments, the negative electrode plate can be prepared as follows: dispersing the above-mentioned components for preparing the negative electrode plate, such as negative electrode active material, conductive agent, binder and any other components, in a solvent (e.g. deionized water) to form a negative electrode slurry; and coating a negative electrode current collector with the negative electrode slurry, followed by procedures such as drying and cold pressing, so as to obtain the negative electrode plate.

### [Electrolyte]

The electrolyte functions to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some embodiments, the electrolyte is liquid and comprises an electrolyte salt and a solvent.

In some embodiments, the electrolyte salt can be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent can be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further optionally comprises an additive. As an example, the additive may include a negative electrode film-forming additive, a positive electrode film-forming additive, and also an additive that can improve certain performances of the battery, such as an additive that improve the overcharge performance of the battery, or an additive that improve the high-temperature performance or low-temperature performance of the battery.

### [Separator]

In some embodiments, the secondary battery further comprises a separator. The type of the separator is not particularly limited in the present application, and any well known porous-structure separator with good chemical stability and mechanical stability may be selected and used.

In some embodiments, the material of the separator can be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by the positive electrode plate, the negative electrode plate and the separator by means of a winding process or a laminating process.

In some embodiments, the secondary battery may comprise an outer package. The outer package can be used to encapsulate the above-mentioned electrode assembly and electrolyte.

In some embodiments, the outer package of the secondary battery can be a hard shell, such as a hard plastic shell, an aluminum shell, a steel shell, etc. The outer package of the secondary battery may also be a soft bag, such as a pouch-type soft bag. The material of the soft bag may be plastics, and the examples of plastics may include polypropylene, polybutylene terephthalate, and polybutylene succinate, etc.

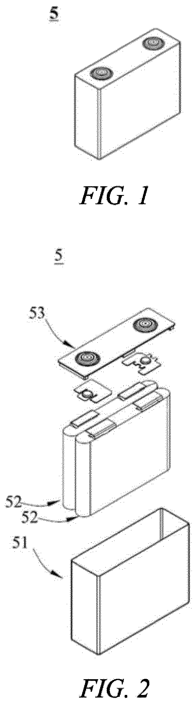

The shape of the secondary battery is not particularly limited in the present application, and may be cylindrical, square or of any other shape. For example, Fig. 1 shows a secondary battery 5 with a square structure as an example.

In some embodiments, with reference to Fig. 2, the outer package may comprise a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate and the separator can form an electrode assembly 52 by a winding process or a lamination process. The electrode assembly 52 is packaged in the accommodating cavity. The electrolyte solution infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

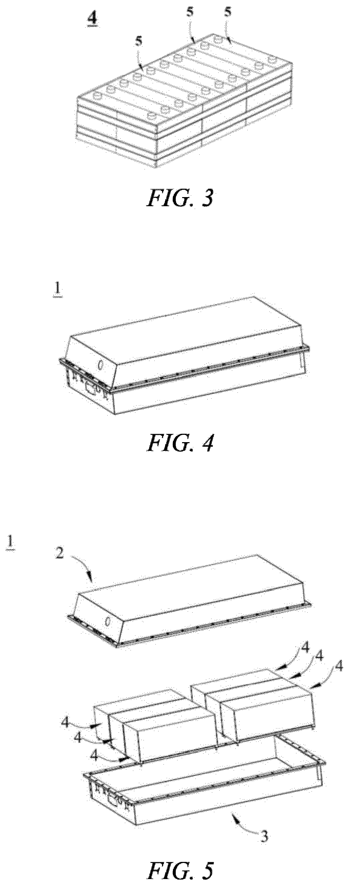

Fig. 3 shows a battery module 4 as an example. Referring to Fig. 3, in the battery module 4, a plurality of secondary batteries 5 may be arranged sequentially in the length direction of the battery module 4. Apparently, the secondary batteries may also be arranged in any other manner. Furthermore, the plurality of secondary batteries 5 may be fixed by fasteners.

Optionally, the battery module 4 may also comprise a housing with an accommodating space, and a plurality of secondary batteries 5 are accommodated in the accommodating space.

In some embodiments, the above-mentioned battery module may also be assembled into a battery pack, the number of the battery modules contained in the battery pack may be one or more, and the specific number can be selected by those skilled in the art according to the application and capacity of the battery pack.

Fig. 4 and Fig. 5 show a battery pack 1 as an example. Referring to Fig. 4 and Fig. 5, the battery pack 1 may comprise a battery box and a plurality of battery modules 4 provided in the battery box. The battery box comprises an upper box body 2 and a lower box body 3, wherein the upper box body 2 can cover the lower box body 3 to form a closed space for accommodating the battery modules 4. A plurality of battery modules 4 may be arranged in the battery box in any manner.

In addition, the present application further provides a power consuming device. The power consuming device comprises at least one of the secondary battery, battery module, or battery pack provided by the present application. The secondary battery, the battery module or the battery pack may be used as a power supply or an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

For the power consuming device, the secondary battery, battery module or battery pack can be selected according to the usage requirements thereof.

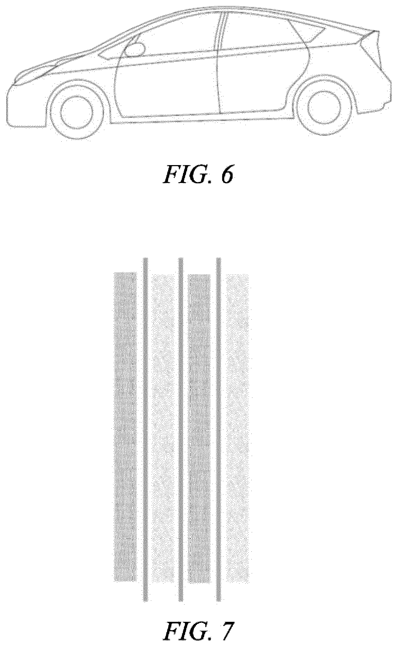

Fig. 6 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a secondary battery, a battery pack or a battery module may be used.

### [Examples]

Hereinafter, the examples of the present application will be explained. The examples described below are exemplary and are merely for explaining the present application, and should not be construed as limiting the present application. The techniques or conditions that are not specified in examples are according to the techniques or conditions described in documents in the art or the product introduction. The reagents or instruments used, if they are not marked with the manufacturer, are common products that are commercially available.

### Preparation of positive electrode active material and slurry thereof

### Preparation example 1

Preparation of doped manganese oxalate: 1.3 mol of MnSO₄·H₂O and 0.7 mol of FeSO₄·H₂O are mixed thoroughly for 6 h in a mixer; the mixture is transferred into a reaction kettle, 10 L of deionized water and 2 mol of oxalic acid dihydrate are added thereto, heated to 80°C, and then stirred for 6 h at a stirring speed of 600 rpm, the reaction is completed (no bubbles are generated), so as to obtain an Fe-doped manganese oxalate suspension; the suspension is filtered, and the resulting filter cake is dried at 120°C and then ground to obtain Fe-doped manganese oxalate particles with a particle size Dv₅₀ of about 100 nm.

Preparation of doped lithium manganese phosphate: 1 mol of the Fe-doped manganese oxalate particles, 0.497 mol of lithium carbonate, 0.001 mol of Mo(SO₄)₃, an 85% of aqueous phosphoric acid solution containing 0.999 mol of phosphoric acid, 0.001 mol of H₄SiO₄, 0.0005 mol of NH₄HF₂ and 0.005 mol of sucrose are added into 20 L of deionized water, and the mixture is transferred into a sander and thoroughly ground and stirred for 10 h to obtain a slurry. The slurry is transferred into a spray drying apparatus for spray-drying granulation, wherein the drying temperature is set at 250°C and the drying time is 4 h, so as to obtain particles. The particles are sintered at 700°C for 10 h in a protective atmosphere of nitrogen (90% v/v) + hydrogen (10% v/v), so as to obtain the positive electrode active material 1, that is, carbon-coated Li_{0.994}Mo_{0.001}Mn_{0.65}Mn_{0.35}P_{0.999}Si_{0.001}O_{3.999}F_{0.001}. The element content of the positive electrode active material can be determined by inductively coupled plasma (ICP) emission spectroscopy.

### Preparation example 2

Except that the amount of high-purity Li₂CO₃ is changed into 0.4885 mol, Mo(SO₄)₃ is replaced by equimolar amount of MgSO₄, the amount of FeSO₄·H₂O is changed into 0.68 mol, 0.02 mol of Ti(SO₄)₂ is further added in the preparation of doped manganese oxalate, and H₄SiO₄ is replaced by equimolar amount of HNO₃, the others are the same as those in preparation example 1.

### Preparation example 3

Except that the amount of high-purity Li₂CO₃ is changed into 0.496 mol, Mo(SO₄)₃ is replaced by equimolar amount of W(SO₄)₃, and H₄SiO₄ is replaced by equimolar amount of H₂SO₄, the others are the same as those in preparation example 1.

### Preparation example 4

Except that the amount of high-purity Li₂CO₃ is changed into 0.4985 mol, 0.001 mol of Mo(SO₄)₃ is replaced by 0.0005 mol of Al₂(SO₄)₃, and NH₄HF₂ is replaced by equimolar amount of NH₄HCl₂, the others are the same as those in preparation example 1.

### Preparation example 5

Except that 0.7 mol of FeSO₄·H₂O is changed into 0.69 mol, 0.01 mol of VCl₂ is further added in the preparation of doped manganese oxalate, the amount of Li₂CO₃ is changed into 0.4965 mol, 0.001 mol of Mo(SO₄)₃ is replaced by 0.0005 mol of Nb₂(SO₄)₅, and H₄SiO₄ is replaced by equimolar amount of H₂SO₄, the others are the same as those in preparation example 1.

### Preparation example 6

Except that the amount of FeSO₄·H₂O is changed into 0.68 mol, 0.01 mol of VCl₂ and 0.01 mol of MgSO₄ are further added in the preparation of doped manganese oxalate, the amount of Li₂CO₃ is changed into 0.4965 mol, 0.001 mol of Mo(SO₄)₃ is replaced by 0.0005 mol of Nb₂(SO₄)₅, and H₄SiO₄ is replaced by equimolar amount of H₂SO₄, the others are the same as those in preparation example 1.

### Preparation example 7

Except that MgSO₄ is replaced by equimolar amount of CoSO₄, the others are the same as those in preparation example 6.

### Preparation example 8

Except that MgSO₄ is replaced by equimolar amount of NiSO₄, the others are the same as those in preparation example 6.

### Preparation example 9

Except that the amount of FeSO₄·H₂O is changed into 0.698 mol, 0.002 mol of Ti(SO₄)₂ is further added in the preparation of doped manganese oxalate, the amount of Li₂CO₃ is changed into 0.4955 mol, 0.001 mol of Mo(SO₄)₃ is replaced by 0.0005 mol of Nb₂(SO₄)₅, H₄SiO₄ is replaced by equimolar amount of H₂SO₄, and NH₄HF₂ is replaced by equimolar amount of NH₄HCl₂, the others are the same as those in preparation example 1.

### Preparation example 10

Except that the amount of FeSO₄·H₂O is changed into 0.68 mol, 0.01 mol of VCl₂ and 0.01 mol of MgSO₄ are further added in the preparation of doped manganese oxalate, the amount of Li₂CO₃ is changed into 0.4975 mol, 0.001 mol of Mo(SO₄)₃ is replaced by 0.0005 mol of Nb₂(SO₄)₅, and NH₄HF₂ is replaced by equimolar amount of NH₄HBr₂, the others are the same as those in preparation example 1.

### Preparation example 11

Except that the amount of FeSO₄·H₂O is changed into 0.69 mol, 0.01 mol of VCl₂ is further added in the preparation of doped manganese oxalate, the amount of Li₂CO₃ is changed into 0.499 mol, Mo(SO₄)₃ is replaced by equimolar amount of MgSO₄, and NH₄HF₂ is replaced by equimolar amount of NH₄HBr₂, the others are the same as those in preparation example 1.

### Preparation example 12

Except that the amount of MnSO₄·H₂O is changed into 1.36 mol, the amount of FeSO₄·H₂O is changed into 0.6 mol, 0.04 mol of VCl₂ is further added in the preparation of doped manganese oxalate, the amount of Li₂CO₃ is changed into 0.4985 mol, Mo(SO₄)₃ is replaced by equimolar amount of MgSO₄, and H₄SiO₄ is replaced by equimolar amount of HNO₃, the others are the same as those in preparation example 1.

### Preparation example 13

Except that the amount of MnSO₄·H₂O is changed into 1.16 mol, the amount of FeSO₄.H₂O is changed into 0.8 mol, the others are the same as those in preparation example 12.

### Preparation example 14

Except that the amount of MnSO₄·H₂O is changed into 1.3 mol, the amount of VCl₂ is changed into 0.1 mol, the others are the same as those in preparation example 12.

### Preparation example 15

Except that the amount of MnSO₄·H₂O is changed into 1.2 mol, 0.1 mol of VCl₂ is further added in the preparation of doped manganese oxalate, the amount of Li₂CO₃ is changed into 0.494 mol, 0.001 mol of Mo(SO₄)₃ is replaced by 0.005 mol of MgSO₄, and H₄SiO₄ is replaced by equimolar amount of H₂SO₄, the others are the same as those in preparation example 1.

### Preparation example 16

Except that the amount of MnSO₄·H₂O is changed into 1.2 mol, 0.1 mol of VCl₂ is further added in the preparation of doped manganese oxalate, the amount of Li₂CO₃ is changed into 0.467 mol, 0.001 mol of Mo(SO₄)₃ is replaced by 0.005 mol of MgSO₄, 0.001 mol of H₄SiO₄ is replaced by 0.005 mol of H₂SO₄, and 1.175 mol of 85% of phosphoric acid is replaced by 1.171 mol of 85% of phosphoric acid, the others are the same as those in preparation example 1.

### Preparation example 17

Except that the amount of MnSO₄·H₂O is changed into 1.2 mol, 0.1 mol of VCl₂ is further added in the preparation of doped manganese oxalate, the amount of Li₂CO₃ is changed into 0.492 mol, 0.001 mol of Mo(SO₄)₃ is replaced by 0.005 mol of MgSO₄, H₄SiO₄ is replaced by equimolar amount of H₂SO₄, and 0.0005 mol of NH₄HF₂ is changed into 0.0025 mol, the others are the same as those in preparation example 1.

### Preparation example 18

Except that the amount of FeSO₄·H₂O is changed into 0.5 mol, 0.1 mol of VCl₂ and 0.1 mol of CoSO₄ are further added in the preparation of doped manganese oxalate, the amount of Li₂CO₃ is changed into 0.492 mol, 0.001 mol of Mo(SO₄)₃ is replaced by 0.005 mol of MgSO₄, H₄SiO₄ is replaced by equimolar amount of H₂SO₄, and 0.0005 mol of NH₄HF₂ is changed into 0.0025 mol, the others are the same as those in preparation example 1.

### Preparation example 19

Except that the amount of FeSO₄·H₂O is changed into 0.4 mol, and 0.1 mol of CoSO₄ is changed into 0.2 mol, the others are the same as those in preparation example 18.

### Preparation example 20

Except that the amount of MnSO₄·H₂O is changed into 1.5 mol, the amount of FeSO₄.H₂O is changed into 0.1 mol, and the amount of CoSO₄ is changed into 0.3 mol, the others are the same as those in preparation example 18.

### Preparation example 21

Except that 0.1 mol of CoSO₄ is replaced by 0.1 mol of NiSO₄, the others are the same as those in preparation example 18.

### Preparation example 22

Except that the amount of MnSO₄·H₂O is changed into 1.5 mol, the amount of FeSO₄.H₂O is changed into 0.2 mol, and 0.1 mol of CoSO₄ is replaced by 0.2 mol of NiSO₄, the others are the same as those in preparation example 18.

### Preparation example 23

Except that the amount of MnSO₄·H₂O is changed into 1.4 mol, the amount of FeSO₄.H₂O is changed into 0.3 mol, the amount of CoSO₄ is changed into 0.2 mol, the others are the same as those in preparation example 18.

### Preparation example 24

Except that 1.3 mol of MnSO₄·H₂O is changed into 1.2 mol, 0.7 mol of FeSO₄.H₂O is changed into 0.5 mol, 0.1 mol of VCl₂ and 0.2 mol of CoSO₄ are further added in the preparation of doped manganese oxalate, the amount of Li₂CO₃ is changed into 0.497 mol, 0.001 mol of Mo(SO₄)₃ is replaced by 0.005 mol of MgSO₄, H₄SiO₄ is replaced by equimolar amount of H₂SO₄, and 0.0005 mol of NH₄HF₂ is changed into 0.0025 mol, the others are the same as those in preparation example 1.

### Preparation example 25

Except that the amount of MnSO₄·H₂O is changed into 1.0 mol, the amount of FeSO₄.H₂O is changed into 0.7 mol, and the amount of CoSO₄ is changed into 0.2 mol, the others are the same as those in preparation example 18.

### Preparation example 26

Except that the amount of MnSO₄·H₂O is changed into 1.4 mol, the amount of FeSO₄.H₂O is changed into 0.3 mol, 0.1 mol of VCl₂ and 0.2 mol of CoSO₄ are further added in the preparation of doped manganese oxalate, the amount of Li₂CO₃ is changed into 0.4825 mol, 0.001 mol of Mo(SO₄)₃ is replaced by 0.005 mol of MgSO₄, the amount of H₄SiO₄ is changed into 0.1 mol, the amount of phosphoric acid is changed into 0.9 mol, and the amount of NH₄HF₂ is changed into 0.04 mol, the others are the same as those in preparation example 1.

### Preparation example 27

Except that the amount of MnSO₄·H₂O is changed into 1.4 mol, the amount of FeSO₄.H₂O is changed into 0.3 mol, 0.1 mol of VCl₂ and 0.2 mol of CoSO₄ are further added in the preparation of doped manganese oxalate, the amount of Li₂CO₃ is changed into 0.485 mol, 0.001 mol of Mo(SO₄)₃ is replaced by 0.005 mol of MgSO₄, the amount of H₄SiO₄ is changed into 0.08 mol, the amount of phosphoric acid is changed into 0.92 mol, and the amount of NH₄HF₂ is changed into 0.05 mol, the others are the same as those in preparation example 1.

### Preparation examples 28-41

The positive electrode active material is prepared in the same way as in preparation example 1, except changing the stirring speed and temperature, grinding and stirring time in a sander, sintering temperature and time during the preparation of doped manganese oxalate, as shown in Table 1 below.

**Table 1 Stirring speed and temperature, grinding and stirring time in sander, sintering temperature and time during the preparation of doped manganese oxalate in preparation examples 28-41**

| | Stirring speed (rpm) | Stirring temperature (°C) | Grinding time (h) | Sintering temperature (°C) | Sintering time (h) |
|---|---|---|---|---|---|
| Preparation example 28 | 200 | 50 | 12 | 700 | 10 |
| Preparation example 29 | 300 | 50 | 12 | 700 | 10 |
| Preparation example 30 | 400 | 50 | 12 | 700 | 10 |
| Preparation example 31 | 500 | 50 | 12 | 700 | 10 |
| Preparation example 32 | 600 | 50 | 10 | 700 | 10 |
| Preparation example 33 | 700 | 50 | 11 | 700 | 10 |
| Preparation example 34 | 800 | 50 | 12 | 700 | 10 |
| Preparation example 35 | 600 | 60 | 12 | 700 | 10 |
| Preparation example 36 | 600 | 70 | 12 | 700 | 10 |
| Preparation example 37 | 600 | 80 | 12 | 700 | 10 |
| Preparation example 38 | 600 | 90 | 12 | 600 | 10 |
| Preparation example 39 | 600 | 100 | 12 | 800 | 10 |
| Preparation example 40 | 600 | 110 | 12 | 700 | 8 |
| Preparation example 41 | 600 | 120 | 12 | 700 | 12 |

### Preparation examples 42-54

The positive electrode active material is prepared in the same manner as in preparation example 1, except changing the sources of lithium, manganese, phosphorus and doping elements A, B, C, and D, as shown in Table 2 below. The prepared positive electrode active materials have the same composition as that in example 1, that is, Li_{0.994}Mo_{0.001}Mn_{0.65}Fe_{0.35}P_{0.999}Si_{0.001}O_{3.999}F_{0.001}.

**Table 2 Sources of lithium, manganese, phosphorus and doping elements A, B, C, and D in preparation examples 42-54**

| | Source of lithium | Source of manganese | Source of phosphorus | Source of A | Source of B | Source of C | Source of D |
|---|---|---|---|---|---|---|---|
| Preparation example 42 | LiOH | MnCO₃ | NH₄H₂PO₄ | Mo(NO₃)₆ | FeO | H₄SiO₄ | NH₄F |
| Preparation example 43 | LiOH | MnO | NH₄H₂PO₄ | Mo(NO₃)₆ | FeO | H₄SiO₄ | NH₄F |
| Preparation example 44 | LiOH | Mn₃O₄ | NH₄H₂PO₄ | Mo(NO₃)₆ | FeO | H₄SiO₄ | NH₄F |
| Preparation example 45 | LiOH | Mn(NO₃)₂ | NH₄H₂PO₄ | Mo(NO₃)₆ | FeO | H₄SiO₄ | NH₄F |
| Preparation example 46 | LiOH | MnO | NH₄H₂PO₄ | Mo(NO₃)₆ | FeCO₃ | H₄SiO₄ | NH₄F |
| Preparation example 47 | LiOH | MnO | NH₄H₂PO₄ | Mo(NO₃)₆ | Fe(NO₃)₂ | H₄SiO₄ | NH₄F |
| Preparation example 48 | LiOH | MnO | NH₄H₂PO₄ | Mo(NO₃)₆ | Fe₃O₄ | H₄SiO₄ | NH₄F |
| Preparation example 49 | LiOH | MnO | NH₄H₂PO₄ | Mo(NO₃)₆ | FeC₂O₄ | H₄SiO₄ | NH₄F |
| Preparation example 50 | LiOH | MnO | NH₄H₂PO₄ | Mo(NO₃)₆ | Fe | H₄SiO₄ | NH₄F |
| Preparation example 51 | LiOH | MnO | NH₄H₂PO₄ | Mo(PO₄)₂ | FeO | H₄SiO₄ | NH₄F |
| Preparation example 52 | LiOH | MnO | NH₄H₂PO₄ | Mo(C₂O₄)₃ | FeO | H₄SiO₄ | NH₄F |
| Preparation example 53 | LiOH | MnO | NH₄H₂PO₄ | MoO₃ | FeO | H₄SiO₄ | NH₄F |
| Preparation example 54 | LiOH | MnO | NH₄H₂PO₄ | Mo | FeO | H₄SiO₄ | NH₄F |

### Preparation examples 55-74

The positive electrode active materials of preparation examples 55-74 are as shown in Table 3.

**Table 3 Positive electrode active materials of preparation examples 55-74**

| No. | Positive electrode active material | Mass content of carbon | Manufacturer |
|---|---|---|---|
| Preparation example 55 | Carbon-coated LiFePO₄ | 1% | Dynanonic Co., Ltd. |
| Preparation example 56 | Mixture of positive electrode active material of preparation example 1 and preparation example 55 in a mass ratio of 1 : 1 | - | - |
| Preparation example 57 | Carbon-coated LiFe_{0.99}Mg_{0.01}PO₄ | 1% | Dynanonic Co., Ltd. |
| Preparation example 58 | Mixture of positive electrode active material of preparation example 1 and preparation example 57 in a mass ratio of 1 : 1 | - | - |
| Preparation example 59 | Carbon-coated LiFePO₄ | 0.10% | Dynanonic Co., Ltd. |
| Preparation example 60 | Carbon-coated LiFePO₄ | 4% | Dynanonic Co., Ltd. |
| Preparation example 61 | Carbon-coated LiFe_{0.99}Mg_{0.01}PO₄ | 0.1% | Dynanonic Co., Ltd. |
| Preparation example 62 | Carbon-coated LiFe_{0.99}Mg_{0.01}PO₄ | 4% | Dynanonic Co., Ltd. |
| Preparation example 63 | Carbon-coated LiFe_{0.999}Mg_{0.001}PO₄ | 1% | Dynanonic Co., Ltd. |
| Preparation example 64 | Carbon-coated LiFe_{0.99}Mg_{0.01}PO₄ | 1% | Dynanonic Co., Ltd. |
| Preparation example 65 | Carbon-coated LiFe_{0.995}V_{0.005}PO₄ | 1% | Dynanonic Co., Ltd. |
| Preparation example 66 | Carbon-coated LiFe_{0.995}Al_{0.005}PO₄ | 1% | Dynanonic Co., Ltd. |
| Preparation examples 67-74 | Mixture of positive electrode active material of preparation example 1 and preparation examples 59-66 in a mass ratio of 1 : 1 | - | - |

### Comparative example 1

**Preparation of manganese oxalate:** 1 mol of MnSO₄·H₂O is added into a reaction kettle, and 10 L of deionized water and 1 mol of oxalic acid dihydrate (based on oxalic acid) are added thereto. The reaction kettle is heated to 80°C, stirring is performed for 6 h at a stirring speed of 600 rpm, and the reaction is completed (no bubbles are generated), so as to obtain a manganese oxalate suspension. Then, the suspension is filtered, and the resulting filter cake is dried at 120°C and then ground to obtain manganese oxalate particles with a median particle size Dv₅₀ of 50 to 200 nm.

**Preparation of lithium manganese phosphate:** 1 mol of the above manganese oxalate particles, 0.5 mol of lithium carbonate, an 85% of aqueous phosphoric acid solution containing 1 mol of phosphoric acid and 0.005 mol of sucrose are added into 20 L of deionized water. The mixture is transferred into a sander and thoroughly ground and stirred for 10 h to obtain a slurry. The slurry is transferred into a spray drying apparatus for spray-drying granulation, wherein the drying temperature is set at 250°C and the drying time is 4 h, so as to obtain particles. The above powder is sintered at 700°C for 10 h in a protective atmosphere of nitrogen (90% by volume) + hydrogen (10% by volume), so as to obtain carbon-coated LiMnPO₄.

### Comparative example 2

Except that in comparative example 1, 1 mol of MnSO₄·H₂O is replaced by 0.85 mol of MnSO₄·H₂O and 0.15 mol of FeSO₄·H₂O, and the mixture is added into a mixer for mixing for 6 h before being added into the reaction kettle, and the others are the same as those in comparative example 1.

### Comparative example 3

Except that the amount of MnSO₄·H₂O is changed into 1.9 mol, 0.7 mol of FeSO₄·H₂O is replaced by 0.1 mol of ZnSO₄, the amount of Li₂CO₃ is changed into 0.495 mol, 0.001 mol of Mo(SO₄)₃ is replaced by 0.005 mol of MgSO₄, the amount of phosphoric acid is changed into 1 mol, without the addition of H₄SiO₄ and NH₄HF₂, the others are the same as those in preparation example 1.

### Comparative example 4

Except that the amount of MnSO₄·H₂O is changed into 1.2 mol, the amount of FeSO₄·H₂O is changed into 0.8 mol, the amount of Li₂CO₃ is changed into 0.45 mol, 0.001 mol of Mo(SO₄)₃ is replaced by 0.005 mol of Nb₂(SO₄)₅, 0.999 mol of phosphoric acid is changed into 1 mol, and 0.0005 mol of NH₄HF₂ is changed into 0.025 mol, without the addition of H₄SiO₄, the others are the same as those in preparation example 1.

### Comparative example 5

Except that the amount of MnSO₄·H₂O is changed into 1.4 mol, the amount of FeSO₄·H₂O is changed into 0.6 mol, the amount of Li₂CO₃ is changed into 0.38 mol, 0.001 mol of Mo(SO₄)₃ is replaced by 0.12 mol of MgSO₄, the others are the same as those in preparation example 1.

### Comparative example 6

Except that the amount of MnSO₄·H₂O is changed into 0.8 mol, 0.7 mol of FeSO₄·H₂O is replaced by 1.2 mol of ZnSO₄, the amount of Li₂CO₃ is changed into 0.499 mol, 0.001 mol of Mo(SO₄)₃ is replaced by 0.001 mol of MgSO₄, the others are the same as those in preparation example 1.

### Comparative example 7

Except that the amount of MnSO₄·H₂O is changed into 1.4 mol, the amount of FeSO₄·H₂O is changed into 0.6 mol, the amount of Li₂CO₃ is changed into 0.534 mol, 0.001 mol of Mo(SO₄)₃ is replaced by 0.001 mol of MgSO₄, the amount of phosphoric acid is changed into 0.88 mol, the amount of H₄SiO₄ is changed into 0.12 mol, and the amount of NH₄HF₂ is changed into 0.025 mol, the others are the same as those in preparation example 1.

### Comparative example 8

Except that the amount of MnSO₄·H₂O is changed into 1.2 mol, the amount of FeSO₄·H₂O is changed into 0.8 mol, the amount of Li₂CO₃ is changed into 0.474 mol, 0.001 mol of Mo(SO₄)₃ is replaced by 0.001 mol of MgSO₄, the amount of phosphoric acid is changed into 0.93 mol, the amount of H₄SiO₄ is changed into 0.07 mol, and the amount of NH₄HF₂ is changed into 0.06 mol, the others are the same as those in preparation example 1.

A positive electrode active material, a binder of PVDF and a conductive agent of superconducting carbon black (Super-P) are mixed in a mass ratio of 97% : 1.5% : 1.5%, and then dispersed in a solvent of N-methylpyrrolidone, so as to obtain a slurry of the positive electrode active material with a solid content of 60% w/w.

### Preparation of positive electrode plate

### Example 1

The slurry of the positive electrode active material of preparation example 1 is uniformly coated on both sides of the current collector of aluminum foil in a coating amount of 0.019 g/cm², vacuum-dried at a high temperature of 100-120°C for 14 h, and compacted by a roller press to obtain the positive electrode plate P1.

### Example 2

The slurry of the positive electrode active material of preparation example 55 is uniformly coated on both sides of the current collector of aluminum foil in a coating amount of 0.019 g/cm², vacuum-dried at a high temperature of 100-120°C for 14 h, and compacted by a roller press to obtain the positive electrode plate P2.

### Example 3

The slurry of the positive electrode active material of preparation example 1 is uniformly coated on one side of the aluminum foil in a coating amount of 0.019 g/cm², and the slurry of the positive electrode active material of preparation example 55 is uniformly coated on the other side of the aluminum foil in a coating amount of 0.019 g/cm², vacuum-dried at a high temperature of 100-120°C for 14 h, and compacted by a roller press to obtain the positive electrode plate P3.

### Example 4

The slurry of the positive electrode active material of preparation example 56 is uniformly coated on both sides of the current collector of aluminum foil in a coating amount of 0.019 g/cm², the others are the same as those in example 3, to obtain the positive electrode plate P4.

### Example 5

The slurry of the positive electrode active material of preparation example 1 is uniformly coated on one side of the aluminum foil in a coating amount of 0.019 g/cm², and the slurry of the positive electrode active material of preparation example 56 is uniformly coated on the other side of the aluminum foil in a coating amount of 0.019 g/cm², the others are the same as those in example 3, to obtain the positive electrode plate P5.

### Example 6

The slurry of the positive electrode active material of preparation example 55 is uniformly coated on one side of the aluminum foil in a coating amount of 0.019 g/cm², and the slurry of the positive electrode active material of preparation example 56 is uniformly coated on the other side of the aluminum foil in a coating amount of 0.019 g/cm², the others are the same as those in example 3, to obtain the positive electrode plate P6.

### Example 7

The slurry of the positive electrode active material of preparation example 1 and the slurry of the positive electrode active material of preparation example 55 are sequentially coated on both sides of the aluminum foil with a coating amount of each slurry being 0.010 g/cm², vacuum-dried at a high temperature of 100-120°C for 14 h, and compacted by a roller press to obtain the positive electrode plate P7.

### Example 8

The slurry of the positive electrode active material of preparation example 1 and the slurry of the positive electrode active material of preparation example 55 are sequentially coated on both sides of the aluminum foil with a coating amount of each slurry being 0.010 g/cm², the others are the same as those in example 7, to obtain the positive electrode plate P8.

### Example 9

The slurry of the positive electrode active material of preparation example 56 and the slurry of the positive electrode active material of preparation example 1 are sequentially coated on both sides of the aluminum foil with a coating amount of each slurry being 0.010 g/cm², the others are the same as those in example 7, to obtain the positive electrode plate P9.

### Example 10

The slurry of the positive electrode active material of preparation example 1 and the slurry of the positive electrode active material of preparation example 56 are sequentially coated on both sides of the aluminum foil with a coating amount of each slurry being 0.010 g/cm², the others are the same as those in example 7, to obtain the positive electrode plate P10.

### Example 11

The slurry of the positive electrode active material of preparation example 56 and the slurry of the positive electrode active material of preparation example 55 are sequentially coated on both sides of the aluminum foil with a coating amount of each slurry being 0.010 g/cm², the others are the same as those in example 7, to obtain the positive electrode plate P11.

### Example 12

The slurry of the positive electrode active material of preparation example 55 and the slurry of the positive electrode active material of preparation example 56 are sequentially coated on both sides of the aluminum foil with a coating amount of each slurry being 0.010 g/cm², the others are the same as those in example 7, to obtain the positive electrode plate P12.

### Example 13

The slurry of the positive electrode active material of preparation example 1 and the slurry of the positive electrode active material of preparation example 55 are sequentially coated on the A side of the aluminum foil with a coating amount of each slurry being 0.010 g/cm², and the slurry of the positive electrode active material of preparation example 1 is uniformly coated on the B side of the aluminum foil with a coating amount of slurry being 0.020 g/cm², then vacuum-dried at a high temperature of 100-120°C for 14 h, and compacted by a roller press to obtain the positive electrode plate P13.

### Example 14

The slurry of the positive electrode active material of preparation example 1 and the slurry of the positive electrode active material of preparation example 55 are sequentially coated on the A side of the aluminum foil with a coating amount of each slurry being 0.010 g/cm², and the slurry of the positive electrode active material of preparation example 55 is uniformly coated on the B side of the aluminum foil with a coating amount of slurry being 0.020 g/cm², the others are the same as those in example 13, to obtain the positive electrode plate P14.

### Example 15

The slurry of the positive electrode active material of preparation example 1 and the slurry of the positive electrode active material of preparation example 55 are sequentially coated on the A side of the aluminum foil with a coating amount of each slurry being 0.010 g/cm², and the slurry of the positive electrode active material of preparation example 56 is uniformly coated on the B side of the aluminum foil with a coating amount of slurry being 0.020 g/cm², the others are the same as those in example 13, to obtain the positive electrode plate P15.

### Example 16

The slurry of the positive electrode active material of preparation example 55 and the slurry of the positive electrode active material of preparation example 1 are sequentially coated on the A side of the aluminum foil with a coating amount of each slurry being 0.010 g/cm², and the slurry of the positive electrode active material of preparation example 1 is uniformly coated on the B side of the aluminum foil with a coating amount of slurry being 0.020 g/cm², the others are the same as those in example 13, to obtain the positive electrode plate P16.

### Example 17

The slurry of the positive electrode active material of preparation example 55 and the slurry of the positive electrode active material of preparation example 1 are sequentially coated on the A side of the aluminum foil with a coating amount of each slurry being 0.010 g/cm², and the slurry of the positive electrode active material of preparation example 55 is uniformly coated on the B side of the aluminum foil with a coating amount of slurry being 0.020 g/cm², the others are the same as those in example 13, to obtain the positive electrode plate P17.

### Example 18

The slurry of the positive electrode active material of preparation example 55 and the slurry of the positive electrode active material of preparation example 1 are sequentially coated on the A side of the aluminum foil with a coating amount of each slurry being 0.010 g/cm², and the slurry of the positive electrode active material of preparation example 56 is uniformly coated on the B side of the aluminum foil with a coating amount of slurry being 0.020 g/cm², the others are the same as those in example 13, to obtain the positive electrode plate P18.

### Example 19

The slurry of the positive electrode active material of preparation example 1 and the slurry of the positive electrode active material of preparation example 56 are sequentially coated on the A side of the aluminum foil with a coating amount of each slurry being 0.010 g/cm², and the slurry of the positive electrode active material of preparation example 1 is uniformly coated on the B side of the aluminum foil with a coating amount of slurry being 0.020 g/cm², the others are the same as those in example 13, to obtain the positive electrode plate P19.

### Example 20

The slurry of the positive electrode active material of preparation example 1 and the slurry of the positive electrode active material of preparation example 56 are sequentially coated on the A side of the aluminum foil with a coating amount of each slurry being 0.010 g/cm², and the slurry of the positive electrode active material of preparation example 55 is uniformly coated on the B side of the aluminum foil with a coating amount of slurry being 0.020 g/cm², the others are the same as those in example 13, to obtain the positive electrode plate P20.

### Example 21

The slurry of the positive electrode active material of preparation example 1 and the slurry of the positive electrode active material of preparation example 56 are sequentially coated on the A side of the aluminum foil with a coating amount of each slurry being 0.010 g/cm², and the slurry of the positive electrode active material of preparation example 56 is uniformly coated on the B side of the aluminum foil with a coating amount of slurry being 0.020 g/cm², the others are the same as those in example 13, to obtain the positive electrode plate P21.

### Example 22

The slurry of the positive electrode active material of preparation example 56 and the slurry of the positive electrode active material of preparation example 1 are sequentially coated on the A side of the aluminum foil with a coating amount of each slurry being 0.010 g/cm², and the slurry of the positive electrode active material of preparation example 1 is uniformly coated on the B side of the aluminum foil with a coating amount of slurry being 0.020 g/cm², the others are the same as those in example 13, to obtain the positive electrode plate P22.

### Example 23

The slurry of the positive electrode active material of preparation example 56 and the slurry of the positive electrode active material of preparation example 1 are sequentially coated on the A side of the aluminum foil with a coating amount of each slurry being 0.010 g/cm², and the slurry of the positive electrode active material of preparation example 55 is uniformly coated on the B side of the aluminum foil with a coating amount of slurry being 0.020 g/cm², the others are the same as those in example 13, to obtain the positive electrode plate P23.

### Example 24

The slurry of the positive electrode active material of preparation example 56 and the slurry of the positive electrode active material of preparation example 1 are sequentially coated on the A side of the aluminum foil with a coating amount of each slurry being 0.010 g/cm², and the slurry of the positive electrode active material of preparation example 56 is uniformly coated on the B side of the aluminum foil with a coating amount of slurry being 0.020 g/cm², the others are the same as those in example 13, to obtain the positive electrode plate P24.

### Example 25

The slurry of the positive electrode active material of preparation example 55 and the slurry of the positive electrode active material of preparation example 56 are sequentially coated on the A side of the aluminum foil with a coating amount of each slurry being 0.010 g/cm², and the slurry of the positive electrode active material of preparation example 1 is uniformly coated on the B side of the aluminum foil with a coating amount of slurry being 0.020 g/cm², the others are the same as those in example 13, to obtain the positive electrode plate P25.

### Example 26

The slurry of the positive electrode active material of preparation example 55 and the slurry of the positive electrode active material of preparation example 56 are sequentially coated on the A side of the aluminum foil with a coating amount of each slurry being 0.010 g/cm², and the slurry of the positive electrode active material of preparation example 55 is uniformly coated on the B side of the aluminum foil with a coating amount of slurry being 0.020 g/cm², the others are the same as those in example 13, to obtain the positive electrode plate P26.

### Example 27

The slurry of the positive electrode active material of preparation example 55 and the slurry of the positive electrode active material of preparation example 56 are sequentially coated on the A side of the aluminum foil with a coating amount of each slurry being 0.010 g/cm², and the slurry of the positive electrode active material of preparation example 56 is uniformly coated on the B side of the aluminum foil with a coating amount of slurry being 0.020 g/cm², the others are the same as those in example 13, to obtain the positive electrode plate P27.

### Example 28

The slurry of the positive electrode active material of preparation example 56 and the slurry of the positive electrode active material of preparation example 55 are sequentially coated on the A side of the aluminum foil with a coating amount of each slurry being 0.010 g/cm², and the slurry of the positive electrode active material of preparation example 1 is uniformly coated on the B side of the aluminum foil with a coating amount of slurry being 0.020 g/cm², the others are the same as those in example 13, to obtain the positive electrode plate P28.

### Example 29

The slurry of the positive electrode active material of preparation example 56 and the slurry of the positive electrode active material of preparation example 55 are sequentially coated on the A side of the aluminum foil with a coating amount of each slurry being 0.010 g/cm², and the slurry of the positive electrode active material of preparation example 55 is uniformly coated on the B side of the aluminum foil with a coating amount of slurry being 0.020 g/cm², the others are the same as those in example 13, to obtain the positive electrode plate P29.

### Example 30

The slurry of the positive electrode active material of preparation example 56 and the slurry of the positive electrode active material of preparation example 55 are sequentially coated on the A side of the aluminum foil with a coating amount of each slurry being 0.010 g/cm², and the slurry of the positive electrode active material of preparation example 56 is uniformly coated on the B side of the aluminum foil with a coating amount of slurry being 0.020 g/cm², the others are the same as those in example 13, to obtain the positive electrode plate P30.

### Example 31

The slurry of the positive electrode active material of preparation example 57 is uniformly coated on both sides of the current collector of aluminum foil in a coating amount of 0.019 g/cm², vacuum-dried at a high temperature of 100-120°C for 14 h, and compacted by a roller press to obtain the positive electrode plate P31.

### Example 32

The slurry of the positive electrode active material of preparation example 58 is uniformly coated on both sides of the current collector of aluminum foil in a coating amount of 0.019 g/cm², vacuum-dried at a high temperature of 100-120°C for 14 h, and compacted by a roller press to obtain the positive electrode plate P32.

### Example 33

The slurry of the positive electrode active material of preparation example 59 is uniformly coated on both sides of the current collector of aluminum foil in a coating amount of 0.019 g/cm², vacuum-dried at a high temperature of 100-120°C for 14 h, and compacted by a roller press to obtain the positive electrode plate P33.

### Example 34

The slurry of the positive electrode active material of preparation example 60 is uniformly coated on both sides of the current collector of aluminum foil in a coating amount of 0.019 g/cm², vacuum-dried at a high temperature of 100-120°C for 14 h, and compacted by a roller press to obtain the positive electrode plate P34.

### Example 35

The slurry of the positive electrode active material of preparation example 61 is uniformly coated on both sides of the current collector of aluminum foil in a coating amount of 0.019 g/cm², vacuum-dried at a high temperature of 100-120°C for 14 h, and compacted by a roller press to obtain the positive electrode plate P35.

### Example 36

The slurry of the positive electrode active material of preparation example 62 is uniformly coated on both sides of the current collector of aluminum foil in a coating amount of 0.019 g/cm², vacuum-dried at a high temperature of 100-120°C for 14 h, and compacted by a roller press to obtain the positive electrode plate P36.

### Example 37

The slurry of the positive electrode active material of preparation example 63 is uniformly coated on both sides of the current collector of aluminum foil in a coating amount of 0.019 g/cm², vacuum-dried at a high temperature of 100-120°C for 14 h, and compacted by a roller press to obtain the positive electrode plate P37.

### Example 38

The slurry of the positive electrode active material of preparation example 64 is uniformed coated on both sides of the current collector of aluminum foil in a coating amount of 0.019 g/cm², the others are the same as those in example 37, to obtain the positive electrode plate P38.

### Example 39

The slurry of the positive electrode active material of preparation example 65 is uniformed coated on both sides of the current collector of aluminum foil in a coating amount of 0.019 g/cm², the others are the same as those in example 37, to obtain the positive electrode plate P39.

### Example 40

The slurry of the positive electrode active material of preparation example 66 is uniformed coated on both sides of the current collector of aluminum foil in a coating amount of 0.019 g/cm², the others are the same as those in example 37, to obtain the positive electrode plate P40.

### Example 41

The slurry of the positive electrode active material of preparation example 67 is uniformed coated on both sides of the current collector of aluminum foil in a coating amount of 0.019 g/cm², the others are the same as those in example 37, to obtain the positive electrode plate P41.

### Example 42

The slurry of the positive electrode active material of preparation example 68 is uniformed coated on both sides of the current collector of aluminum foil in a coating amount of 0.019 g/cm², the others are the same as those in example 37, to obtain the positive electrode plate P42.

### Example 43

The slurry of the positive electrode active material of preparation example 69 is uniformed coated on both sides of the current collector of aluminum foil in a coating amount of 0.019 g/cm², the others are the same as those in example 37, to obtain the positive electrode plate P3.

### Example 44

The slurry of the positive electrode active material of preparation example 70 is uniformed coated on both sides of the current collector of aluminum foil in a coating amount of 0.019 g/cm², the others are the same as those in example 37, to obtain the positive electrode plate P44.

### Example 45

The slurry of the positive electrode active material of preparation example 71 is uniformed coated on both sides of the current collector of aluminum foil in a coating amount of 0.019 g/cm², the others are the same as those in example 37, to obtain the positive electrode plate P45.

### Example 46

The slurry of the positive electrode active material of preparation example 72 is uniformed coated on both sides of the current collector of aluminum foil in a coating amount of 0.019 g/cm², the others are the same as those in example 37, to obtain the positive electrode plate P46.

### Example 47

The slurry of the positive electrode active material of preparation example 73 is uniformed coated on both sides of the current collector of aluminum foil in a coating amount of 0.019 g/cm², the others are the same as those in example 37, to obtain the positive electrode plate P47.

### Example 48

The slurry of the positive electrode active material of preparation example 74 is uniformed coated on both sides of the current collector of aluminum foil in a coating amount of 0.019 g/cm², the others are the same as those in example 37, to obtain the positive electrode plate P48.

The parameters of the above positive electrode plate are shown in Table 4.

**Table 4 Parameters of positive electrode plate**

| Positive electrode plate | Number of positive electrode film layers on A side of aluminum foil | Positive electrode active material on A side of aluminum foil | Number of positive electrode film layers on B side of aluminum foil | Positive electrode active material on B side of aluminum foil | Thickness of positive electrode plate (mm) | Density of positive electrode plate (g/cm³) | Mass content of first positive electrode active material in positive electrode active material # | Mass content of second positive electrode active material in positive electrode active material # |
|---|---|---|---|---|---|---|---|---|
| Positive electrode plate P1 | 1 | Preparation example 1 | 1 | Preparation example 1 | 0.25 | 2.5 | 100% | NA |
| Positive electrode plate P2 | 1 | Preparation example 55 | 1 | Preparation example 55 | 0.25 | 2.5 | NA | 100% |
| Positive electrode plate P3 | 1 | Preparation example 1 | 1 | Preparation example 55 | 0.25 | 2.5 | 50% | 50% |
| Positive electrode plate P4 | 1 | Preparation example 56 | 1 | Preparation example 56 | 0.25 | 2.5 | 50% | 50% |
| Positive electrode plate P5 | 1 | Preparation example 1 | 1 | Preparation example 56 | 0.25 | 2.5 | 75% | 25% |
| Positive electrode plate P6 | 1 | Preparation example 55 | 1 | Preparation example 56 | 0.25 | 2.5 | 25% | 75% |
| Positive electrode plate P7 | 2 | First layer*: Preparation example 1 | 2 | First layer: Preparation example 1 | 0.25 | 2.5 | 50% | 50% |
| | | Second layer*: Preparation example 55 | | Second layer: Preparation example 55 | | | | |
| Positive electrode plate P8 | 2 | First layer: Preparation example 55 | 2 | First layer: Preparation example 55 | 0.25 | 2.5 | 50% | 50% |
| | | Second layer: Preparation example 1 | | Second layer: Preparation example 1 | | | | |
| Positive electrode plate P9 | 2 | First layer: Preparation example 1 | 2 | First layer: Preparation example 1 | 0.25 | 2.5 | 75% | 25% |
| | | Second layer: Preparation example 56 | | Second layer: Preparation example 56 | | | | |
| Positive electrode plate P10 | 2 | First layer: Preparation example 56 | 2 | First layer: Preparation example 56 | 0.25 | 2.5 | 75% | 25% |
| | | Second layer: Preparation example 1 | | Second layer: Preparation example 1 | | | | |
| Positive electrode plate P11 | 2 | First layer: Preparation example 55 | 2 | First layer: Preparation example 55 | 0.25 | 2.5 | 25% | 75% |
| | | Second layer: Preparation example 56 | | Second layer: Preparation example 56 | | | | |
| Positive electrode plate P12 | 2 | First layer: Preparation example 56 | 2 | First layer: Preparation example 56 | 0.25 | 2.5 | 25% | 75% |
| | | Second layer: Preparation example 55 | | Second layer: Preparation example 55 | | | | |
| Positive electrode plate P13 | 2 | First layer: Preparation example 1 | 1 | Preparation example 1 | 0.25 | 2.5 | 75% | 25% |
| | | Second layer: Preparation example 55 | | | | | | |
| Positive electrode plate P14 | 2 | First layer: Preparation example 1 | 1 | Preparation example 55 | 0.25 | 2.5 | 25% | 75% |
| | | Second layer: Preparation example 55 | | | | | | |
| Positive electrode plate P15 | 2 | First layer: Preparation example 1 | 1 | Preparation example 56 | 0.25 | 2.5 | 50% | 50% |
| | | Second layer: Preparation example 55 | | | | | | |
| Positive electrode plate P16 | 2 | First layer: Preparation example 55 | 1 | Preparation example 1 | 0.25 | 2.5 | 75% | 25% |
| | | Second layer: Preparation example 1 | | | | | | |
| Positive electrode plate P17 | 2 | First layer: Preparation example 55 | 1 | Preparation example 55 | 0.25 | 2.5 | 25% | 75% |
| | | Second layer: Preparation example 1 | | | | | | |
| Positive electrode plate P18 | 2 | First layer: Preparation example 55 | 1 | Preparation example 56 | 0.25 | 2.5 | 50% | 50% |
| | | Second layer: Preparation example 1 | | | | | | |
| Positive electrode plate P19 | 2 | First layer: Preparation example 1 | 1 | Preparation example 1 | 0.25 | 2.5 | 87.5% | 12.5% |
| | | Second layer: Preparation example 56 | | | | | | |
| Positive electrode plate P20 | 2 | First layer: Preparation example 1 | 1 | Preparation example 55 | 0.25 | 2.5 | 37.5% | 62.5% |
| | | Second layer: Preparation example 56 | | | | | | |
| Positive electrode plate P21 | 2 | First layer: Preparation example 1 | 1 | Preparation example 56 | 0.25 | 2.5 | 62.5% | 37.5% |
| | | Second layer: Preparation example 56 | | | | | | |
| Positive electrode plate P22 | 2 | First layer: Preparation example 56 | 1 | Preparation example 1 | 0.25 | 2.5 | 87.5% | 12.5% |
| | | Second layer: Preparation example 1 | | | | | | |
| Positive electrode plate P23 | 2 | First layer: Preparation example 56 | 1 | Preparation example 55 | 0.25 | 2.5 | 37.5% | 62.5% |
| | | Second layer: Preparation example 1 | | | | | | |
| Positive electrode plate P24 | 2 | First layer: Preparation example 56 | 1 | Preparation example 56 | 0.25 | 2.5 | 62.5% | 37.5% |
| | | Second layer: Preparation example 1 | | | | | | |
| Positive electrode plate P25 | 2 | First layer: Preparation example 55 | 1 | Preparation example 1 | 0.25 | 2.5 | 62.5% | 37.5% |
| | | Second layer: Preparation example 56 | | | | | | |
| Positive electrode plate P26 | 2 | First layer: Preparation example 55 | 1 | Preparation example 55 | 0.25 | 2.5 | 12.5% | 87.5% |
| | | Second layer: Preparation example 56 | | | | | | |
| Positive electrode plate P27 | 2 | First layer: Preparation example 55 | 1 | Preparation example 56 | 0.25 | 2.5 | 37.5% | 62.5% |
| | | Second layer: Preparation example 56 | | | | | | |
| Positive electrode plate P28 | 2 | First layer: Preparation example 56 | 1 | Preparation example 1 | 0.25 | 2.5 | 62.5% | 37.5% |
| | | Second layer: Preparation example 55 | | | | | | |
| Positive electrode plate P29 | 2 | First layer: Preparation example 56 | 1 | Preparation example 55 | 0.25 | 2.5 | 12.5% | 87.5% |
| | | Second layer: Preparation example 55 | | | | | | |
| Positive electrode plate P30 | 2 | First layer: Preparation example 56 | 1 | Preparation example 56 | 0.25 | 2.5 | 37.5% | 62.5% |
| | | Second layer: Preparation example 55 | | | | | | |
| Positive electrode plate P31 | 1 | Preparation example 57 | 1 | Preparation example 57 | 0.25 | 2.5 | NA | 100% |
| Positive electrode plate P32 | 1 | Preparation example 58 | 1 | Preparation example 58 | 0.25 | 2.5 | 50% | 50% |
| Positive electrode plate P33 | 1 | Preparation example 59 | 1 | Preparation example 59 | 0.25 | 2.5 | NA | 100% |
| Positive electrode plate P34 | 1 | Preparation example 60 | 1 | Preparation example 60 | 0.25 | 2.5 | NA | 100% |
| Positive electrode plate P35 | 1 | Preparation example 61 | 1 | Preparation example 61 | 0.25 | 2.5 | NA | 100% |
| Positive electrode plate P36 | 1 | Preparation example 62 | 1 | Preparation example 62 | 0.25 | 2.5 | NA | 100% |
| Positive electrode plate P37 | 1 | Preparation example 63 | 1 | Preparation example 63 | 0.25 | 2.5 | NA | 100% |
| Positive electrode plate P38 | 1 | Preparation example 64 | 1 | Preparation example 64 | 0.25 | 2.5 | NA | 100% |
| Positive electrode plate P39 | 1 | Preparation example 65 | 1 | Preparation example 65 | 0.25 | 2.5 | NA | 100% |
| Positive electrode plate P40 | 1 | Preparation example 66 | 1 | Preparation example 66 | 0.25 | 2.5 | NA | 100% |
| Positive electrode plate P41 | 1 | Preparation example 67 | 1 | Preparation example 67 | 0.25 | 2.5 | 50% | 50% |
| Positive electrode plate P42 | 1 | Preparation example 68 | 1 | Preparation example 68 | 0.25 | 2.5 | 50% | 50% |
| Positive electrode plate 43 | 1 | Preparation example 69 | 1 | Preparation example 69 | 0.25 | 2.5 | 50% | 50% |
| Positive electrode plate 44 | 1 | Preparation example 70 | 1 | Preparation example 70 | 0.25 | 2.5 | 50% | 50% |
| Positive electrode plate 45 | 1 | Preparation example 71 | 1 | Preparation example 71 | 0.25 | 2.5 | 50% | 50% |
| Positive electrode plate 46 | 1 | Preparation example 72 | 1 | Preparation example 72 | 0.25 | 2.5 | 50% | 50% |
| Positive electrode plate 47 | 1 | Preparation example 73 | 1 | Preparation example 73 | 0.25 | 2.5 | 50% | 50% |
| Positive electrode plate 48 | 1 | Preparation example 74 | 1 | Preparation example 74 | 0.25 | 2.5 | 50% | 50% |

| | | | | | | | | |
|---|---|---|---|---|---|---|---|---|
| "*": the first layer refers to a layer in contact with the surface of the aluminum foil, and the second layer refers to a layer provided on the first layer. "#": the first positive electrode active material refers to the positive electrode active material prepared in preparation example 1, and the second positive electrode active material refers to the positive electrode active materials prepared in preparation example 55, preparation example 57, preparation examples 59-66. | | | | | | | | |

### Preparation of negative electrode plate

A negative electrode active material of artificial graphite, a conductive agent of superconducting carbon black (Super-P), a binder of styrene butadiene rubber (SBR) and a thickening agent of sodium carboxymethylcellulose (CMC-Na) are dissolved in deionized water in a mass ratio of 95% : 1.5% : 1.8% : 1.7%, followed by fully stirring and uniformly mixing to obtain a negative electrode slurry with a viscosity of 3000 mPa s and a solid content of 52%; the negative electrode slurry is coated on a negative electrode current collector of copper foil with a thickness of 6 µm, and then baked at 100°C for 4 h for drying, followed by roll pressing to obtain the negative electrode plate with a compacted density of 1.75 g/cm3.

### Separator

A polypropylene film is used.

### Preparation of electrolyte solution

Ethylene carbonate, dimethyl carbonate and 1,2-propylene glycol carbonate are mixed in a volume ratio of 1 : 1 : 1, and then LiPF₆ is uniformly dissolved in the above solution to obtain an electrolyte solution. In the electrolyte solution, the concentration of LiPF₆ is 1 mol/L.

### Preparation of full battery

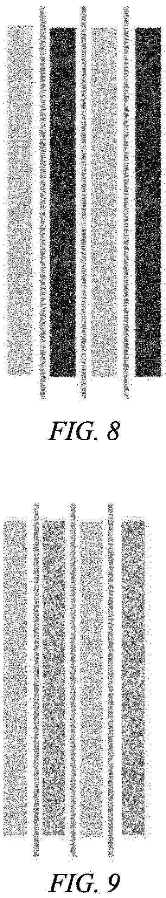

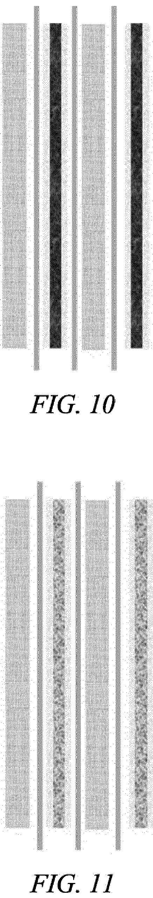

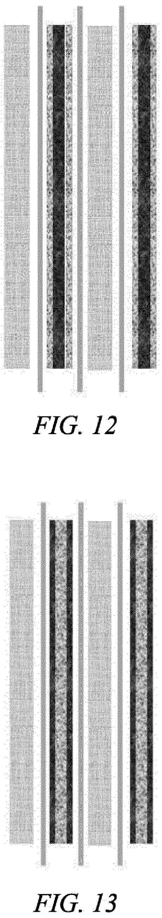

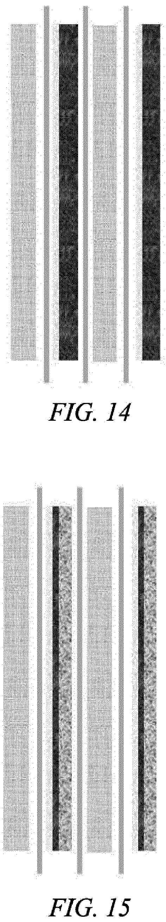

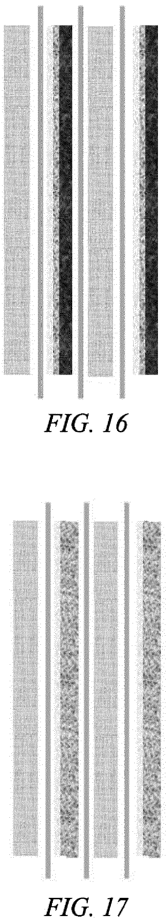

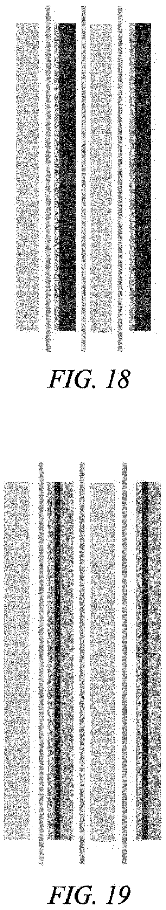

The above positive electrode plate is used, and a bare cell is formed by a winding method according to the sequence of a negative electrode plate, a separator, and a positive electrode plate, and aluminum tabs and copper tabs are respectively punched out to obtain the bare cell; copper and copper tabs, and aluminum and aluminum tabs of two bare cells are welded together to the top cover of the battery via an adapter. After the bare cells are wrapped and insulated, the bare cells are put into an aluminum shell, and the top cover and the aluminum shell are welded to form a dry cell. The day cell is baked to remove water and then injected with an electrolyte solution, and the battery is formed and aged to obtain a full battery accordingly. Herein, the structure of the batteries made of the positive electrode plates P1, P2, P3, P8, P10, P11, P12, P17, P18, P23, P24, P26, and P27 is shown in Fig. 7-19.

### Preparation of button battery

The above positive electrode plate, negative electrode plate and electrolyte solution are assembled together into a button battery in a button battery box.

### I. Test of properties of positive electrode active material

### 1. Determination of chemical formula of positive electrode active material

A spherical aberration electron microscope (ACSTEM) is used to characterize the internal microstructure and surface structure of the positive electrode active material with high spatial resolution, combined with three-dimensional reconstruction technology to obtain the chemical formula of the positive electrode active material.

### 2. Method for determining lattice change rate

In a constant-temperature environment at 25°C, a positive electrode active material sample is placed in XRD (model: Bruker D8 Discover) and tested at 1°/min, and the test data are organized and analyzed; and with reference to the standard PDF card, lattice constants a0, b0, c0 and v0 at this moment are calculated (a0, b0 and c0 represent the lengths of a unit cell on all sides, and v0 represents the volume of the unit cell, which can be obtained directly from XRD refinement results).

The positive electrode active material sample is made into a positive electrode plate according to the method for preparing the positive electrode plate P1, and then same is made into a button battery according to the above "Preparation of button battery", and the button battery is charged at a small rate of 0.05C until the current is reduced to 0.01C. Then a positive electrode plate in the button battery is taken out and soaked in DMC for 8 h. Then the positive electrode plate is dried, powder is scraped off, and particles with a particle size of less than 500 nm are screened out. Sampling was performed, and a lattice constant v1 is calculated in the same way as that for testing the fresh sample as described above. (v0 - v1)/v0 × 100% is shown in a table as a lattice change rate of the sample before and after complete lithium de-intercalation.

### 3. Method for determining Li/Mn antisite defect concentration

The XRD results determined in the "Method for determining lattice change rate" are compared with the PDF (Powder Diffraction File) card of a standard crystal, so as to obtain a Li/Mn antisite defect concentration. Specifically, the XRD results determined in the "Method for determining lattice change rate" are imported into a general structure analysis system (GSAS) software, and refinement results are obtained automatically, including the occupancies of different atoms; and a Li/Mn antisite defect concentration is obtained by reading the refinement results.

### 4. Method for determining surface oxygen valence state

5 g of positive electrode active material sample is made into a positive electrode plate according to the method for preparing the positive electrode plate P1, and then same is made into a button battery according to the above "Preparation of button battery". The button battery is charged at a small rate of 0.05C until the current is reduced to 0.01C. Then a positive electrode plate in the button battery is taken out and soaked in DMC for 8 h. Then the positive electrode plate is dried, powder is scraped off, and particles with a particle size of less than 500 nm are screened out. The obtained particles are determined by electron energy loss spectroscopy (EELS, instrument model used: Talos F200S), so as to obtain an energy loss near-edge structure (ELNES), which reflects the density of states and energy level distribution of an element. According to the density of states and energy level distribution, the number of occupied electrons is calculated by integrating the data of valence-band density of states, and then a valence state of surface oxygen after the charging is extrapolated.

### 5. Method for measuring compacted density

5 g of positive electrode active material powder is put into a compaction dedicated mold (U.S. CARVER mold, model: 13 mm), and then the mold is placed on a compacted density instrument. A pressure of 3T is exerted, the thickness (after pressure relief) of the powder under pressure is read from the instrument, and a compacted density is calculated through ρ = m/v.

### 6. Method for measuring dissolution of Mn (and Fe doping on Mn position) after cycling

The positive electrode active material sample is made into a positive electrode plate according to the method for preparing the positive electrode plate P1, and then same is made into a full battery according to the above "Preparation of full battery".

A full battery after cycling to 80% attenuated capacity at 45°C is discharged to a cutoff voltage of 2.0 V at a rate of 0.1C. Then the battery is disassembled, a negative electrode plate is taken out, a round piece of 30 unit areas (1540.25 mm²) is randomly taken from the negative electrode plate, and inductively coupled plasma (ICP) emission spectroscopy is performed with Agilent ICP-OES730. The amounts of Fe (if the Mn position of the positive electrode active material is doped with Fe) and Mn therein are calculated according to the ICP results, and then the dissolution of Mn (and Fe doping on the Mn position) after cycling is calculated. The testing standard is in accordance with EPA-6010D-2014.

### 7. Method for determining initial gram capacity of button battery

At 2.5 to 4.3 V, a button battery is charged at 0.1C to 4.3 V, then charged at a constant voltage of 4.3 V until the current is less than or equal to 0.05 mA, allowed to stand for 5 min, and then discharged at 0.1C to 2.0 V; and the discharge capacity at this moment is the initial gram capacity, marked as D0.

### 8. Method for measuring 3C charge constant current rate

In a constant-temperature environment at 25°C, a fresh full battery is allowed to stand for 5 min, and discharged at 1/3C to 2.5 V. The full battery is allowed to stand for 5 min, charged at 1/3C to 4.3 V, and then charged at a constant voltage of 4.3 V until the current is less than or equal to 0.05 mA. The full battery is allowed to stand for 5 min, and the charge capacity at this moment is recorded as C0. The full battery is discharged at 1/3C to 2.5 V, allowed to stand for 5 min, then charged at 3C to 4.3 V, and allowed to stand for 5 min, and the charge capacity at this moment is recorded as C1. The 3C charge constant current rate is C1/C0 x 100%.

A higher 3C charge constant current rate indicates a better performance rate of the battery.

### 9. Test of cycling performance of full battery at 45°C

In a constant-temperature environment at 45°C, at 2.5 to 4.3 V, a full battery is charged at 1C to 4.3 V, and then charged at a constant voltage of 4.3 V until the current is less than or equal to 0.05 mA. The full battery is allowed to stand for 5 min, and then discharged at 1C to 2.5V, and the discharge capacity at this moment is recorded as D0. The above-mentioned charge/discharge cycle is repeated until the discharge capacity is reduced to 80% of D0. The number of cycles experienced by the battery at this moment is recorded.

### 10. Test of expansion of full battery at 60°C

A full battery with 100% SOC (State of Charge) is stored at 60°C. Before and after and during the storage, the open-circuit voltage (OCV) and AC internal impedance (IMP) of a cell are measured for monitoring the SOC, and the volume of the cell is measured. Herein, the full battery is taken out after every 48 h of storage, and allowed to stand for 1 h, then the OCV and internal IMP are measured, and the cell volume is measured with the displacement method after the full battery is cooled to room temperature. The displacement method means that the gravity F₁ of the cell is measured separately using a balance of which the on-board data is subjected to automatic unit conversion, then the cell is completely placed in deionized water (with a density known as 1 g/cm³), the gravity F₂ of the cell at this moment is measured, the buoyancy F_{buoyancy} on the cell is F₁ - F₂, and then the cell volume V = (F₁ - F₂)/(ρ × g) is calculated according to the Archimedes principle F_{buoyancy} = (ρ × g × V_{displacement}).

From the test results of OCV and IMP, the battery of the example always maintains a SOC of no less than 99% in the experimental process till the end of the storage.

After 30 days of storage, the cell volume is measured, and a percentage increase in cell volume after the storage relative to the cell volume before the storage is calculated.

In addition, residual capacity of the cell is measured. At 2.5 to 4.3 V, the full battery is charged at 1C to 4.3 V, and then charged at a constant voltage of 4.3 V until the current is less than or equal to 0.05 mA. The full battery is allowed to stand for 5 min, and the charge capacity at this moment is recorded as the residual capacity of the cell.

Table 5 shows the compositions of the positive electrode active materials of preparation examples 1-11 and comparative examples 1-8. Table 6 shows the performance data of the positive electrode active materials or button batteries or full batteries of preparation examples 1-11 and comparative examples 1-8 obtained according to the above-mentioned performance testing methods. Table 7 shows the compositions of the positive electrode active materials of preparation examples 12-27. Table 8 shows the performance data of the positive electrode active materials or button batteries or full batteries of preparation examples 12-27 obtained according to the above-mentioned performance testing methods. Table 9 shows the performance data of the positive electrode active materials or button batteries or full batteries of preparation examples 28-41 obtained according to the above-mentioned performance testing methods. Table 10 shows the performance data of the positive electrode active materials or button batteries or full batteries of preparation examples 42-54 obtained according to the above-mentioned performance testing methods.

**Table 5 Chemical formula of positive electrode active material of preparation examples 1-11 and comparative examples 1-8**

| | Chemical formula |
|---|---|
| Preparation example 1 | Li_{0.994}Mo_{0.001}Mn_{0.65}Fe_{0.35}P_{0.999}Si_{0.001}O_{3.999}F_{0.001} |
| Preparation example 2 | Li_{0.977}Mg_{0.001}Mn_{0.65}Fe_{0.34}Ti_{0.01}P_{0.999}N_{0.001}O_{3.999}F_{0.001} |
| Preparation example 3 | Li_{0.992}W_{0.001}Mn_{0.65}Fe_{0.35}P_{0.999}S_{0.001}O_{3.999}F_{0.001} |
| Preparation example 4 | Li_{0.997}Al_{0.001}Mn_{0.65}Fe_{0.35}P_{0.999}Si_{0.001}O_{3.999}Cl_{0.001} |
| Preparation example 5 | Li_{0.993}Nb_{0.001}Mn_{0.65}Fe_{0.345}V_{0.005}P_{0.999}S_{0.001}O_{3.999}F_{0.001} |
| Preparation example 6 | Li_{0.993}Nb_{0.001}Mn_{0.65}Fe_{0.34}V_{0.005}Mg_{0.005}P_{0.999}S_{0.001}O_{3.999}F_{0.001} |
| Preparation example 7 | Li_{0.993}Nb_{0.001}Mn_{0.65}Fe_{0.34}V_{0.005}Co_{0.005}P_{0.999}S_{0.001}O_{3.999}F_{0.001} |
| Preparation example 8 | Li_{0.993}Nb_{0.001}Mn_{0.65}Fe_{0.34}V_{0.005}Ni_{0.005}P_{0.999}S_{0.001}O_{3.999}F_{0.001} |
| Preparation example 9 | Li_{0.991}Nb_{0.001}Mn_{0.65}Fe_{0.349}Ti_{0.001}P_{0.999}S_{0.001}O_{3.999}Cl_{0.001} |
| Preparation example 10 | Li_{0.995}Nb_{0.001}Mn_{0.65}Fe_{0.34}V_{0.005}Mg_{0.005}P_{0.999}Si_{0.001}O_{3.000}Br_{0.001} |
| Preparation example 11 | Li_{0.998}Mg_{0.001}Mn_{0.001}Fe_{0.345}V_{0.005}P_{0.999}Si_{0.001}O_{3.999}Br_{0.001} |
| Comparative example 1 | LiMnPO₄ |
| Comparative example 2 | LiMn_{0.85}Fe_{0.15}PO₄ |
| Comparative example 3 | Li_{0.990}Mg_{0.005}Mn_{0.95}Zn_{0.05}PO₄ |
| Comparative example 4 | Li_{0.90}Nb_{0.01}Mn_{0.6}Fe_{0.4}PO_{3.95}F_{0.05} |
| Comparative example 5 | Li_{0.76}Mg_{0.12}Mn_{0.7}Fe_{0.3}P_{0.999}Si_{0.001}O_{3.999}F_{0.001} |
| Comparative example 6 | Li_{0.998}Mg_{0.001}Mn_{0.4}Zn_{0.6}P_{0.999}Si_{0.001}O_{3.999}F_{0.001} |
| Comparative example 7 | Li_{1.068}Mg_{0.001}Mn_{0.7}Fe_{0.3}P_{0.88}Si_{0.12}O_{3.95}F_{0.05} |
| Comparative example 8 | Li_{0.948}Mg_{0.001}Mn_{0.6}Fe_{0.4}P_{0.93}Si_{0.07}O_{3.88}F_{0.12} |

**Table 6 Performance data of positive electrode active materials or button batteries or full batteries of preparation examples 1-11 and comparative examples 1-8 obtained according to the above-mentioned performance testing methods**

| | Lattice change rate (%) | Li/Mn antisite defect concentration (%) | Surface oxygen valence state | Compacted density (g/cm³) | Dissolution of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|
| Comparative example 1 | 11.4 | 5.2 | -1.55 | 1.7 | 2060 | 125.6 | 50.1 | 121 | 48.6 |
| Comparative example 2 | 10.6 | 4.3 | -1.51 | 1.87 | 1510 | 126.4 | 50.4 | 129 | 37.3 |
| Comparative example 3 | 10.8 | 3.6 | -1.64 | 1.88 | 1028 | 134.7 | 51.7 | 134 | 31.9 |
| Comparative example 4 | 9.7 | 2.4 | -1.71 | 1.93 | 980 | 141.3 | 62.3 | 148 | 30.8 |
| Comparative example 5 | 5.6 | 1.8 | -1.81 | 1.98 | 873 | 110.8 | 50.2 | 387 | 21.4 |
| Comparative example 6 | 3.7 | 1.5 | -1.80 | 2.01 | 574 | 74.3 | 65.8 | 469 | 15.8 |
| Comparative example 7 | 7.8 | 1.5 | -1.75 | 2.05 | 447 | 139.4 | 64.3 | 396 | 18.3 |
| Comparative example 8 | 8.4 | 1.4 | -1.79 | 2.16 | 263 | 141.7 | 63.9 | 407 | 22.7 |
| Preparation example 1 | 6.3 | 1.2 | -1.82 | 2.21 | 192 | 156.2 | 68.1 | 552 | 8.4 |
| Preparation example 2 | 6.8 | 1.1 | -1.85 | 2.25 | 161 | 153.4 | 75.1 | 583 | 7.5 |
| Preparation example 3 | 6.4 | 0.9 | -1.86 | 2.31 | 144 | 154.6 | 76.7 | 646 | 8.6 |
| Preparation example 4 | 5.5 | 0.9 | -1.89 | 2.38 | 125 | 153.6 | 78.4 | 638 | 8.3 |
| Preparation example 5 | 5.3 | 0.7 | -1.98 | 2.45 | 102 | 153.8 | 84.5 | 769 | 7.8 |
| Preparation example 6 | 2.4 | 0.7 | -1.95 | 2.47 | 88 | 157.5 | 92.5 | 747 | 6.4 |
| Preparation example 7 | 2.2 | 0.6 | -1.96 | 2.49 | 85 | 158.5 | 94.8 | 858 | 6.3 |
| Preparation example 8 | 3.4 | 0.5 | -1.98 | 2.51 | 79 | 157.6 | 93.8 | 726 | 6.2 |
| Preparation example 9 | 3.8 | 0.5 | -1.96 | 2.45 | 86 | 146.8 | 90.3 | 686 | 6.8 |
| Preparation example 10 | 4.0 | 0.6 | -1.97 | 2.46 | 103 | 155.7 | 91.2 | 638 | 6.5 |
| Preparation example 11 | 3.6 | 0.7 | -1.95 | 2.46 | 112 | 155.8 | 92.6 | 587 | 6.4 |

**Table 7 Chemical formula and element ratio of positive electrode active material of preparation examples 12-27**

| | Chemical formula | (1-y) : y | a : x |
|---|---|---|---|
| Preparation example 12 | Li_{0.997}Mg_{0.001}Mn_{0.68}Fe_{0.3}V_{0.02}P_{0.999}N_{0.001}O_{3.999}F_{0.001} | 2.13 | 997 |
| Preparation example 13 | Li_{0.997}Mg_{0.001}Mn_{0.58}Fe_{0.4}V_{0.02}P_{0.999}N_{0.001}O_{3.999}F_{0.001} | 1.38 | 997 |
| Preparation example 14 | Li_{0.997}Mg_{0.001}Mn_{0.65}Fe_{0.3}V_{0.05}P_{0.999}N_{0.001}O_{3.995}F_{0.001} | 1.86 | 997 |
| Preparation example 15 | Li_{0.988}Mg_{0.005}Mn_{0.6}Fe_{0.35}V_{0.05}P_{0.999}S_{0.001}O_{3.999}F_{0.001} | 1.50 | 197.6 |
| Preparation example 16 | Li_{0.984}Mg_{0.005}Mn_{0.6}Fe_{0.35}V_{0.05}P_{0.995}S_{0.005}O_{3.999}F_{0.001} | 1.50 | 196.8 |
| Preparation example 17 | Li_{0.984}Mg_{0.005}Mn_{0.6}Fe_{0.35}V_{0.05}P_{0.999}S_{0.001}O_{3.995}F_{0.005} | 1.50 | 196.8 |
| Preparation example 18 | Li_{0.984}Mg_{0.005}Mn_{0.65}Fe_{0.25}V_{0.05}Co_{0.05}P_{0.999}S_{0.001}O_{3.995}F_{0.005} | 1.86 | 196.8 |
| Preparation example 19 | Li_{0.984}Mg_{0.005}Mn_{0.65}Fe_{0.20}V_{0.05}Co_{0.10}P_{0.999}S_{0.001}O_{3.995}F_{0.005} | 1.86 | 196.8 |
| Preparation example 20 | Li_{0.984}Mg_{0.005}Mn_{0.75}Fe_{0.05}V_{0.05}Co_{0.15}P_{0.999}S_{0.001}O_{3.995}F_{0.005} | 3.00 | 196.8 |
| Preparation example 21 | Li_{0.984}Mg_{0.005}Mn_{0.65}Fe_{0.25}V_{0.05}Ni_{0.05}P_{0.999}S_{0.001}O_{3.995}F_{0.005} | 1.86 | 196.8 |
| Preparation example 22 | Li_{0.984}Mg_{0.005}Mn_{0.75}Fe_{0.10}V_{0.05}Ni_{0.10}P_{0.999}S_{0.001}O_{3.995}F_{0.005} | 3.00 | 196.8 |
| Preparation example 23 | Li_{0.984}Mg_{0.005}Mn_{0.7}Fe_{0.15}V_{0.05}Co_{0.10}P_{0.999}S_{0.001}O_{3.995}F_{0.005} | 2.33 | 196.8 |
| Preparation example 24 | Li_{0.984}Mg_{0.005}Mn_{0.6}Fe_{0.25}V_{0.05}Co_{0.10}P_{0.999}S_{0.001}O_{3.995}F_{0.005} | 1.50 | 196.8 |
| Preparation example 25 | Li_{0.984}Mg_{0.005}Mn_{0.5}Fe_{0.35}V_{0.05}Co_{0.10}P_{0.999}S_{0.001}O_{3.995}F_{0.005} | 1.00 | 196.8 |
| Preparation example 26 | Li_{1.01}Mg_{0.005}Mn_{0.7}Fe_{0.15}V_{0.05}Co_{0.10}P_{0.9}Si_{0.1}O_{3.92}F_{0.08} | 2.33 | 202 |
| Preparation example 27 | Li_{0.97}Mg_{0.005}Mn_{0.7}Fe_{0.15}V_{0.05}Co_{0.10}P_{0.92}Si_{0.08}O_{3.9}F_{0.1} | 2.33 | 194 |

**Table 8 Performance data of positive electrode active materials or button batteries or full batteries of preparation examples 12-27 obtained according to the above-mentioned performance testing methods**

| | Lattice change rate (%) | Li/Mn antisite defect concentration (%) | Surface oxygen valence state | Compacted density (g/cm³) | Dissolution of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|
| Preparation example 12 | 7.4 | 0.5 | -1.96 | 2.45 | 92 | 153.3 | 97.2 | 948 | 6.7 |
| Preparation example 13 | 7.6 | 0.4 | -1.98 | 2.48 | 83 | 157.1 | 85.1 | 953 | 7.8 |
| Preparation example 14 | 7.8 | 0.6 | -1.95 | 2.47 | 87 | 155.4 | 85.2 | 1067 | 6.9 |
| Preparation example 15 | 6.4 | 0.5 | -1.97 | 2.49 | 86 | 156.4 | 82.1 | 938 | 7.5 |
| Preparation example 16 | 5.4 | 0.7 | -1.94 | 2.44 | 86 | 156.1 | 87.3 | 927 | 8.4 |
| Preparation example 17 | 4.2 | 0.6 | -1.98 | 2.42 | 88 | 156.5 | 92.1 | 919 | 7.5 |
| Preparation example 18 | 2.5 | 0.4 | -1.96 | 2.46 | 84 | 157.4 | 94.0 | 1057 | 6.4 |
| Preparation example 19 | 2.4 | 0.4 | -1.97 | 2.47 | 84 | 156.8 | 94.4 | 1064 | 6.7 |
| Preparation example 20 | 2.6 | 0.4 | -1.95 | 2.45 | 86 | 154.8 | 93.7 | 975 | 7.3 |
| Preparation example 21 | 3.3 | 0.5 | -1.93 | 2.46 | 82 | 155.7 | 91.5 | 989 | 6.3 |
| Preparation example 22 | 3.1 | 0.5 | -1.95 | 2.46 | 75 | 157.3 | 91.6 | 964 | 6.3 |
| Preparation example 23 | 2.8 | 0.6 | -1.96 | 2.44 | 67 | 151.8 | 84.4 | 864 | 5.9 |
| Preparation example 24 | 2.5 | 0.5 | -1.97 | 2.45 | 65 | 152.3 | 90.2 | 976 | 5.6 |
| Preparation example 25 | 2.2 | 0.4 | -1.98 | 2.46 | 58 | 153.3 | 92.2 | 986 | 5.2 |
| Preparation example 26 | 3.4 | 0.6 | -1.95 | 2.25 | 45 | 147.3 | 92.5 | 978 | 9.3 |
| Preparation example 27 | 2.7 | 0.5 | -1.98 | 2.28 | 42 | 145.8 | 91.8 | 937 | 10.5 |

**Table 9 Performance data of positive electrode active materials or button batteries or full batteries of preparation examples 28-41 obtained according to the above-mentioned performance testing methods**

| | Lattice change rate (%) | Li/Mn antisite defect concentration | Surface oxygen valence state | Compacted density (g/cm³) | Dissolution of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|
| Preparation example 28 | 7.8 | 5.6 | -1.59 | 1.89 | 341 | 138.1 | 53.1 | 594 | 24.1 |
| Preparation example 29 | 7.4 | 4.8 | -1.62 | 1.94 | 279 | 140.3 | 55.6 | 628 | 22.4 |
| Preparation example 30 | 7.2 | 4.5 | -1.66 | 1.98 | 248 | 141.5 | 56.8 | 689 | 21.6 |
| Preparation example 31 | 7.1 | 4.1 | -1.68 | 2.01 | 216 | 142.3 | 57.5 | 721 | 18.7 |
| Preparation example 32 | 6.8 | 3.8 | -1.71 | 2.04 | 184 | 143.8 | 59.3 | 749 | 15.6 |
| Preparation example 33 | 6.7 | 3.4 | -1.75 | 2.06 | 176 | 144.2 | 61.4 | 756 | 11.3 |
| Preparation example 34 | 6.6 | 3.1 | -1.76 | 2.08 | 139 | 148.2 | 62.6 | 787 | 10.8 |
| Preparation example 35 | 6.4 | 2.7 | -1.76 | 2.13 | 126 | 149.8 | 63.8 | 816 | 9.6 |
| Preparation example 36 | 6.4 | 1.9 | -1.77 | 2.15 | 103 | 152.3 | 65.4 | 937 | 8.9 |
| Preparation example 37 | 6.4 | 1.4 | -1.84 | 2.27 | 89 | 157.2 | 69.1 | 982 | 8.2 |
| Preparation example 38 | 6.5 | 1.8 | -1.78 | 2.16 | 113 | 153.9 | 66.3 | 921 | 9.1 |
| Preparation example 39 | 6.8 | 2.7 | -1.76 | 2.12 | 134 | 152.1 | 64.5 | 998 | 9.8 |
| Preparation example 40 | 7.1 | 3.4 | -1.74 | 2.08 | 161 | 150.2 | 63.4 | 926 | 10.5 |
| Preparation example 41 | 7.8 | 4.5 | -1.70 | 2.03 | 189 | 148.1 | 61.3 | 837 | 11.8 |

**Table 10 Performance data of positive electrode active materials or button batteries or full batteries of preparation examples 42-54 obtained according to the above-mentioned performance testing methods**

| | Lattice change rate (%) | Li/Mn antisite defect concentration | Surfac e oxygen valenc e state | Compacte d density (g/cm³) | Dissolutio n of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|
| Preparation example 42 | 6.5 | 2.8 | -1.80 | 2.19 | 95 | 155.7 | 67.3 | 519 | 10.3 |
| Preparation example 43 | 6.7 | 2.6 | -1.81 | 2.18 | 88 | 156.1 | 67.6 | 525 | 9.8 |
| Preparation example 44 | 6.8 | 2.7 | -1.83 | 2.20 | 91 | 155.5 | 67.5 | 522 | 10.1 |
| Preparation example 45 | 6.7 | 2.6 | -1.82 | 2.17 | 85 | 155.9 | 67.4 | 517 | 9.5 |
| Preparation example 46 | 6.4 | 2.5 | -1.83 | 2.18 | 134 | 150.9 | 61.4 | 501 | 11.6 |
| Preparation example 47 | 6.1 | 2.1 | -1.81 | 2.21 | 114 | 152.8 | 63.7 | 518 | 10.8 |
| Preparation example 48 | 6.6 | 1.8 | -1.79 | 2.23 | 105 | 154.3 | 65.4 | 538 | 9.2 |
| Preparation example 49 | 6.4 | 1.4 | -1.85 | 2.22 | 95 | 156.6 | 68.4 | 572 | 8.7 |
| Preparation example 50 | 7.5 | 3.4 | -1.75 | 2.08 | 115 | 149.5 | 58.3 | 426 | 9.6 |
| Preparation example 51 | 6.5 | 1.5 | -1.83 | 2.21 | 95 | 155.8 | 67.5 | 531 | 8.8 |
| Preparation example 52 | 6.8 | 1.7 | -1.81 | 2.23 | 101 | 154.6 | 66.9 | 518 | 7.4 |
| Preparation example 53 | 6.6 | 1.6 | -1.82 | 2.24 | 118 | 155.3 | 67.2 | 508 | 7.9 |
| Preparation example 54 | 8.7 | 2.4 | -1.79 | 2.17 | 129 | 152.3 | 65.4 | 483 | 11.2 |

It can be seen from Tables 6, 8, 9 and 10 above that, the positive electrode active materials of the preparation examples of the present application all achieve a better effect than the comparative examples in one or even all terms of cycling performance, high-temperature stability, gram capacity and compacted density.

Through comparison between preparation examples 18-20 and 23-25, it can be seen that in the case of the same rest elements, when (1-y) : y is in a range of 1 to 4, the energy density and cycling performance of the secondary battery can be further improved.

### II. Test of battery

The following tests are carried out on the secondary batteries made of positive electrode plates P2-P48:
(1) the energy density of the secondary battery is determined in accordance with the method in the national standard GB 38031-2020 "Electric vehicles traction battery safety requirements";
(2) the low-temperature discharge capacity retention rate at 20°C of the secondary battery (after being charged and discharged for two cycles) are determined in accordance with the national standard GBT31486-2015 "Electrical performance requirements and test methods for traction battery of electric vehicle" to obtain the dynamic data of the battery;
(3) the normal-temperature cycle life of the secondary battery at 80% SOH is determined in accordance with the standard cycle test method in the national standard GBT31484-2015 "Cycle life requirements and test methods for traction battery of electric vehicle";
(4) the low-temperature cycle life of the secondary battery at 80% SOH is determined with reference to the standard cycle test method in the national standard GBT31484-2015 "Cycle life requirements and test methods for traction battery of electric vehicle", with the temperature during the test being adjusted to -10°C, the charge and discharge current being adjusted to 0.33C, and the other conditions being unchanged;
(5) the specific power data of the secondary battery at 20% SOC is determined with reference to the national standard GBT31486-2015 "Electrical performance requirements and test methods for traction battery of electric vehicle", and the detailed steps are as follows:
   a) the battery is charged according to the method 6.3.4 in the national standard GBT31486-2015;
   b) the secondary battery is discharged at room temperature at a current of 1C for 48 min, and then discharged at the specified maximum discharge current for 10 s, then allowed to stand for 30 min, and then charged at the specified maximum charging current for 10 s; and
   c) the specific power (W/kg) of the cell is calculated by dividing the discharge energy during charge and discharge for 10 s by the charge-discharge time of 10 s.

The results are shown in Table 11.

**Table 11 Results of the test of battery**

| Electrode plate used for battery | Energy density (Wh/L) | | Energy density (Wh/kg) | | -20°C, discharge capacity retention rate at 0.33C | Specific power capacity (25°C, 20% SOC, 10S) (W/kg) | Cycle life, Cycles (80% SOH, 25°C) | Cycle life, Cycles (80% SOH, - 10°C) |
|---|---|---|---|---|---|---|---|---|
| Positive electrode plate P2 | 418.1 | Base | 186.3 | Base | 38% | 1055 | 3500 | 300 |
| Positive electrode plate P3 | 457.6 | 9.45% | 203.9 | 9.45% | 53% | 1201 | 3600 | 640 |
| Positive electrode plate P4 | 457.6 | 9.45% | 203.9 | 9.45% | 55% | 1556 | 3570 | 630 |
| Positive electrode plate P5 | 473.3 | 13.20% | 210.8 | 13.15% | 65% | 1659 | 3510 | 700 |
| Positive electrode plate P6 | 442.9 | 5.93% | 197.2 | 5.85% | 45% | 1353 | 3480 | 370 |
| Positive electrode plate P7 | 457.6 | 9.45% | 203.9 | 9.45% | 54% | 1603 | 3560 | 630 |
| Positive electrode plate P8 | 457.6 | 9.45% | 203.9 | 9.45% | 52% | 1300 | 3490 | 500 |
| Positive electrode plate P9 | 473.3 | 13.20% | 210.8 | 13.15% | 67% | 1752 | 3800 | 720 |
| Positive electrode plate P10 | 473.3 | 13.20% | 210.8 | 13.15% | 64% | 1708 | 3780 | 720 |
| Positive electrode plate P11 | 442.9 | 5.93% | 197.2 | 5.85% | 47% | 1454 | 3760 | 610 |
| Positive electrode plate P12 | 442.9 | 5.93% | 197.2 | 5.85% | 43% | 1503 | 3800 | 680 |
| Positive electrode plate P13 | 473.3 | 13.20% | 210.8 | 13.15% | 64% | 1644 | 3450 | 730 |
| Positive electrode plate P14 | 442.9 | 5.93% | 197.2 | 5.85% | 44% | 1342 | 3800 | 380 |
| Positive electrode plate P15 | 457.6 | 9.45% | 203.9 | 9.45% | 53% | 1576 | 3660 | 610 |
| Positive electrode plate P16 | 473.3 | 13.20% | 210.8 | 13.15% | 60% | 1425 | 3400 | 540 |
| Positive electrode plate P17 | 442.9 | 5.93% | 197.2 | 5.85% | 45% | 1245 | 3760 | 320 |
| Positive electrode plate P18 | 457.6 | 9.45% | 203.9 | 9.45% | 53% | 1420 | 3560 | 520 |
| Positive electrode plate P19 | 482.3 | 15.36% | 214.3 | 15.03% | 68% | 1670 | 3450 | 730 |
| Positive electrode plate P20 | 450.8 | 7.82% | 200.6 | 7.68% | 50% | 1315 | 3610 | 600 |
| Positive electrode plate P21 | 466.7 | 11.62% | 207.6 | 11.43% | 52% | 1595 | 3500 | 610 |
| Positive electrode plate P22 | 482.3 | 15.36% | 214.3 | 15.03% | 69% | 1703 | 3840 | 710 |
| Positive electrode plate P23 | 450.8 | 7.82% | 200.6 | 7.68% | 52% | 1321 | 3460 | 590 |
| Positive electrode plate P24 | 466.7 | 11.62% | 207.6 | 11.43% | 51% | 1506 | 3610 | 600 |
| Positive electrode plate P25 | 466.7 | 11.62% | 207.6 | 11.43% | 54% | 1583 | 3390 | 610 |
| Positive electrode plate P26 | 430.1 | 2.87% | 192 | 3.06% | 40% | 1208 | 3890 | 500 |
| Positive electrode plate P27 | 450.8 | 7.82% | 200.6 | 7.68% | 45% | 1453 | 3790 | 550 |
| Positive electrode plate P28 | 466.7 | 11.62% | 207.6 | 11.43% | 53% | 1608 | 3520 | 640 |
| Positive electrode plate P29 | 430.1 | 2.87% | 192 | 3.06% | 42% | 1304 | 3910 | 540 |
| Positive electrode plate P30 | 450.8 | 7.82% | 200.6 | 7.68% | 46% | 1505 | 3720 | 560 |
| Positive electrode plate P31 | 425 | 1.65% | 189 | 1.45% | 39% | 1053 | 3990 | 310 |
| Positive electrode plate P32 | 457.6 | 9.45% | 203.9 | 9.45% | 55% | 1600 | 3690 | 600 |
| Positive electrode plate P33 | 418.1 | 0.00% | 186.3 | 0.00% | 10% | 340 | 267 | 50 |
| Positive electrode plate P34 | 418.1 | 0.00% | 186.3 | 0.00% | 30% | 1006 | 3920 | 350 |
| Positive electrode plate P35 | 418.1 | 0.00% | 186.3 | 0.00% | 11% | 386 | 287 | 50 |
| Positive electrode plate P36 | 418.1 | 0.00% | 186.3 | 0.00% | 32% | 1115 | 3989 | 350 |
| Positive electrode plate P37 | 418.1 | 0.00% | 186.3 | 0.00% | 31% | 1003 | 3821 | 300 |
| Positive electrode plate P38 | 418.1 | 0.00% | 186.3 | 0.00% | 33% | 999 | 3890 | 300 |
| Positive electrode plate P39 | 418.1 | 0.00% | 186.3 | 0.00% | 30% | 1010 | 3991 | 300 |
| Positive electrode plate P40 | 418.1 | 0.00% | 186.3 | 0.00% | 32% | 1013 | 3910 | 300 |
| Positive electrode plate P41 | 457.6 | 9.45% | 203.9 | 9.46% | 40% | 438 | 325 | 122 |
| Positive electrode plate P42 | 457.6 | 9.45% | 203.9 | 9.46% | 52% | 1267 | 3220 | 679 |
| Positive electrode plate P43 | 457.6 | 9.45% | 203.9 | 9.46% | 42% | 564 | 378 | 116 |
| Positive electrode plate P44 | 457.6 | 9.45% | 203.9 | 9.46% | 51% | 1280 | 3280 | 679 |
| Positive electrode plate P45 | 457.6 | 9.45% | 203.9 | 9.46% | 50% | 1320 | 3310 | 619 |
| Positive electrode plate P46 | 457.6 | 9.45% | 203.9 | 9.46% | 51% | 1352 | 3341 | 678 |
| Positive electrode plate P47 | 457.6 | 9.45% | 203.9 | 9.46% | 52% | 1360 | 3312 | 664 |
| Positive electrode plate P48 | 457.6 | 9.45% | 203.9 | 9.46% | 52% | 1379 | 3319 | 658 |

It can be seen from the above results that:
compared with the secondary battery made of the positive electrode plate P2, the secondary batteries made of the positive electrode plates P3-P30 have higher energy density, higher low-temperature discharge capacity retention rate, higher specific power, and longer low-temperature cycle life, and the secondary batteries made of positive electrode plates P3-P5, P7, P9-P12, P14-15, P17-18, P20, P22, P24, P26-P30 have a longer normal-temperature cycle life;
compared with the secondary battery made of the positive electrode plate P31, the secondary battery made of the positive electrode plate P32 has higher energy density, higher low-temperature discharge capacity retention rate, higher specific power, and longer low-temperature cycle life;
the positive electrode plates P41-P48 contain a first positive electrode active material and a second positive electrode active material, while the positive electrode plates P33-P40 only contain the same amount of corresponding second positive electrode active material, and compared with the positive electrode plate containing only the second positive electrode active material, the secondary battery made of the positive electrode plate containing the first positive electrode active material and the second positive electrode active material has higher energy density, higher low-temperature discharge capacity retention rate, higher specific power and longer low-temperature cycle life.

The above shows that the secondary battery made of the positive electrode plate of the present application has higher energy density, better dynamic performance, better cell performance rate, longer low-temperature cycle life, higher low-temperature cycle capacity retention rate and higher safety.

It should be noted that the present application is not limited to the above embodiments. The above embodiments are exemplary only.

## Claims

1. A positive electrode plate, comprising a positive electrode current collector and a positive electrode film layer provided on at least one surface of the positive electrode current collector, wherein the positive electrode film layer has a single-layer structure or a multi-layer structure; when the positive electrode film layer has a single-layer structure, at least one of the positive electrode film layers contains both a first positive electrode active material with a chemical formula of LiₐAₓMn_{1-y}R_{y}P_{1-z}C_{z}O₄₋ₙDₙ and a second positive electrode active material; and/or when the positive electrode film layer has a multi-layer structure, at least one of the positive electrode film layers contains both a first positive electrode active material with a chemical formula of LiₐAₓMn_{1-y}R_{y}P_{1-z}C_{z}O₄₋ₙDₙ and a second positive electrode active material; wherein
A includes one or more elements selected from Zn, Al, Na, K, Mg, Nb, Mo and W;
R includes one or more elements selected from Ti, V, Zr, Fe, Ni, Mg, Co, Ga, Sn, Sb, Nb and Ge;
C includes one or more elements selected from B, S, Si and N;
D includes one or more elements selected from S, F, Cl and Br;
a is selected from the range of 0.9 to 1.1, x is selected from the range of 0.001 to 0.1, y is selected from the range of 0.001 to 0.5, z is selected from the range of 0.001 to 0.1, and n is selected from the range of 0.001 to 0.1;
the second positive electrode active material is selected from one or more of LiFePO₄, carbon-coated LiFePO₄, LiFe_{b}M_{c}PO₄ and carbon-coated LiFe_{b}M_{c}PO₄, wherein M independently includes one or more elements selected from Ti, Zn, Co, Mn, La, V, Mg, Al, Nb, W, Zr, Nb, Sm, Cr, Cu and B, b is independently selected from the range of 0.99 to 0.999 and b + c = 1.

2. A positive electrode plate, comprising a positive electrode current collector and a positive electrode film layer provided on at least one surface of the positive electrode current collector, wherein at least one of the positive electrode film layers has a multi-layer structure, and any one of the positive electrode film layers having a multi-layer structure respectively contains a first positive electrode active material with a chemical formula of LiₐAₓMn_{1-y}R_{y}P_{1-z}C_{z}O₄₋ₙDₙ and a second positive electrode active material in different layers; wherein
A includes one or more elements selected from Zn, Al, Na, K, Mg, Nb, Mo and W;
R includes one or more elements selected from Ti, V, Zr, Fe, Ni, Mg, Co, Ga, Sn, Sb, Nb and Ge;
C includes one or more elements selected from B, S, Si and N;
D includes one or more elements selected from S, F, Cl and Br;
a is selected from the range of 0.9 to 1.1, x is selected from the range of 0.001 to 0.1, y is selected from the range of 0.001 to 0.5, z is selected from the range of 0.001 to 0.1, and n is selected from the range of 0.001 to 0.1;
the second positive electrode active material is selected from one or more of LiFePO₄, carbon-coated LiFePO₄, LiFe_{b}M_{c}PO₄ and carbon-coated LiFe_{b}M_{c}PO₄, wherein M independently includes one or more elements selected from Ti, Zn, Co, Mn, La, V, Mg, Al, Nb, W, Zr, Nb, Sm, Cr, Cu and B, b is independently selected from the range of 0.99 to 0.999 and b + c = 1;
optionally, any one of the positive electrode film layers having a multi-layer structure respectively contains the first positive electrode active material and the second positive electrode active material in adjacent layers.

3. A positive electrode plate, comprising a positive electrode current collector and a positive electrode film layer A and a positive electrode film layer B respectively provided on both surfaces of the positive electrode current collector; wherein the positive electrode film layer A and the positive electrode film layer B independently have a single-layer structure or a multi-layer structure; at least one of the positive electrode film layers A contains a first positive electrode active material with a chemical formula of LiₐAₓMn_{1-y}R_{y}P_{1-z}C_{z}O₄₋ₙDₙ, and at least one of the positive electrode film layers B contains a second positive electrode active material; wherein
A includes one or more elements selected from Zn, Al, Na, K, Mg, Nb, Mo and W;
R includes one or more elements selected from Ti, V, Zr, Fe, Ni, Mg, Co, Ga, Sn, Sb, Nb and Ge;
C includes one or more elements selected from B, S, Si and N;
D includes one or more elements selected from S, F, Cl and Br;
a is selected from the range of 0.9 to 1.1, x is selected from the range of 0.001 to 0.1, y is selected from the range of 0.001 to 0.5, z is selected from the range of 0.001 to 0.1, and n is selected from the range of 0.001 to 0.1;
the second positive electrode active material is selected from one or more of LiFePO₄, carbon-coated LiFePO₄, LiFe_{b}M_{c}PO₄ and carbon-coated LiFe_{b}M_{c}PO₄, wherein M independently includes one or more elements selected from Ti, Zn, Co, Mn, La, V, Mg, Al, Nb, W, Zr, Nb, Sm, Cr, Cu and B, b is independently selected from the range of 0.99 to 0.999 and b + c = 1.

4. The positive electrode plate according to any one of claims 1 to 3, wherein in the second positive electrode active material,
the mass of carbon accounts for 0.1%-4% of the mass of carbon-coated LiFePO₄; and/or
the mass of carbon accounts for 0.1%-4% of the mass of the carbon-coated LiFe_{b}M_{c}PO₄.

5. The positive electrode plate according to any one of claims 1 to 4, wherein the mass ratio of the first positive electrode active material to the second positive electrode active material is 1 : 7 to 7 : 1, and optionally 1 : 4 to 4 : 1.

6. The positive electrode plate according to any one of claims 1 to 5, wherein in the first positive electrode active material,
R is at least two elements selected from Ti, V, Zr, Fe, Ni, Mg, Co, Ga, Sn, Sb, Nb and Ge; and/or
A is any element selected from Mg and Nb, and/or,
R is at least two elements selected from Fe, Ti, V, Co and Mg, optionally is Fe and one or more elements selected from Ti, V, Co and Mg, and/or,
C is S, and/or,
D is F.

7. The positive electrode plate according to any one of claims 1 to 6, wherein in the first positive electrode active material,
x is selected from the range of 0.001 to 0.005; and/or
y is selected from the range of 0.01 to 0.5, and optionally selected from the range of 0.25 to 0.5; and/or
z is selected from the range of 0.001 to 0.005; and/or
n is selected from the range of 0.001 to 0.005; and/or
the ratio of (1-y) to y is selected from the range of 1 to 4, and optionally selected from the range of 1.5 to 3; and/or
the ratio of a to x is selected from the range of 9 to 1100, and optionally selected from the range of 190 to 998.

8. The positive electrode plate according to any one of claims 1 to 7, wherein the lattice change rate of the first positive electrode active material is less than 8%, and optionally less than 4%, wherein the lattice change rate is determined by X-ray diffraction, XRD.

9. The positive electrode plate according to any one of claims 1 to 8, wherein the Li/Mn antisite defect concentration of the first positive electrode active material is less than 2%, and optionally less than 0.5% and/or, wherein the surface oxygen valence state of the first positive electrode active material is less than -1.82, and optionally -1.89 to -1.98, wherein in order to obtain the Li/Mn antisite defect concentration the X-ray diffraction, XRD, results determined in the "Method for determining lattice change rate" are compared with the Powder Diffraction File, PDF, card of a standard crystal.

10. The positive electrode plate according to any one of claims 1 to 9, wherein the compacted density of the first positive electrode active material at 3T is greater than 2.0 g/cm³, and optionally greater than 2.2 g/cm³, wherein the compacted density is determined in accordance with GB/T 24533-2009.

11. The positive electrode plate according to any one of claims 1 to 10, wherein the surface of the first positive electrode active material is further coated with carbon and/or, wherein the sum of the mass of the first positive electrode active material and the second positive electrode active material accounts for 88%-98.7% of the mass of the positive electrode plate.

12. A secondary battery (5), comprising the positive electrode plate according to any one of claims 1 to 11.

13. A battery module (4), comprising the secondary battery (5) according to claim 12.

14. A battery pack (1), comprising the battery module (4) according to claim 13.

15. A power consuming device, comprising at least one selected from the secondary battery (5) according to claim 12, the battery module (4) according to claim 13 and the battery pack (1) according to claim 14.

## Patentansprüche

1. Positivelektrodenplatte, umfassend einen Positivelektrodenstromsammler und eine Positivelektrodenfilmschicht, die auf mindestens einer Oberfläche des Positivelektrodenstromsammlers bereitgestellt ist, wobei die Positivelektrodenfilmschicht eine Einschichtstruktur oder eine Mehrschichtstruktur aufweist; wenn die Positivelektrodenfilmschicht eine Einschichtstruktur aufweist, mindestens eine der Positivelektrodenfilmschichten sowohl ein erstes Positivelektrodenaktivmaterial mit einer chemischen Formel von LiₐAₓMn_{1-y}R_{y}P_{1-z}C_{z}C₄₋ₙDₙ als auch ein zweites Positivelektrodenaktivmaterial enthält; und/oder wenn die Positivelektrodenfilmschicht eine Mehrschichtstruktur aufweist, mindestens eine der Positivelektrodenfilmschichten sowohl ein erstes Positivelektrodenaktivmaterial mit einer chemischen Formel von LiₐAₓMn_{1-y}R_{y}P_{1-z}C_{z}C₄₋ₙDₙ als auch ein zweites Positivelektrodenaktivmaterial enthält;
wobei
A ein oder mehrere Elemente einschließt, die aus Zn, Al, Na, K, Mg, Nb, Mo und W ausgewählt sind;
R ein oder mehrere Elemente einschließt, die aus Ti, V, Zr, Fe, Ni, Mg, Co, Ga, Sn, Sb, Nb und Ge ausgewählt sind;
C ein oder mehrere Elemente einschließt, die aus B, S, Si und N ausgewählt sind;
D ein oder mehrere Elemente einschließt, die aus S, F, Cl und Br ausgewählt sind;
a aus dem Bereich von 0,9 bis 1,1 ausgewählt ist, x aus dem Bereich von 0,001 bis 0,1 ausgewählt ist, y aus dem Bereich von 0,001 bis 0,5 ausgewählt ist, z aus dem Bereich von 0,001 bis 0,1 ausgewählt ist, und n aus dem Bereich von 0,001 bis 0,1 ausgewählt ist;
das zweite Positivelektrodenaktivmaterial aus einem oder mehreren von LiFePO₄, kohlenstoffbeschichtetem LiFePO₄, LiFe_{b}M_{c}PO₄ und kohlenstoffbeschichtetem LiFe_{b}M_{c}PO₄ ausgewählt ist, wobei M unabhängig ein oder mehrere Elemente einschließt, die aus Ti, Zn, Co, Mn, La, V, Mg, Al, Nb, W, Zr, Nb, Sm, Cr, Cu und B ausgewählt sind, b unabhängig aus dem Bereich von 0,99 bis 0,999 ausgewählt ist und b + c = 1.

2. Positivelektrodenplatte, umfassend einen Positivelektrodenstromsammler und eine Positivelektrodenfilmschicht, die auf mindestens einer Oberfläche des Positivelektrodenstromsammlers bereitgestellt ist, wobei mindestens eine der Positivelektrodenfilmschichten eine Mehrschichtstruktur aufweist und jede der Positivelektrodenfilmschichten, die eine Mehrschichtstruktur aufweisen, jeweils ein erstes Positivelektrodenaktivmaterial mit einer chemischen Formel LiₐAₓMn_{1-y}R_{y}P_{1-z}C_{z}O₄₋ₙDₙ und ein zweites Positivelektrodenaktivmaterial in verschiedenen Schichten enthält;
wobei
A ein oder mehrere Elemente einschließt, die aus Zn, Al, Na, K, Mg, Nb, Mo und W ausgewählt sind;
R ein oder mehrere Elemente einschließt, die aus Ti, V, Zr, Fe, Ni, Mg, Co, Ga, Sn, Sb, Nb und Ge ausgewählt sind;
C ein oder mehrere Elemente einschließt, die aus B, S, Si und N ausgewählt sind;
D ein oder mehrere Elemente einschließt, die aus S, F, Cl und Br ausgewählt sind;
a aus dem Bereich von 0,9 bis 1,1 ausgewählt ist, x aus dem Bereich von 0,001 bis 0,1 ausgewählt ist, y aus dem Bereich von 0,001 bis 0,5 ausgewählt ist, z aus dem Bereich von 0,001 bis 0,1 ausgewählt ist, und n aus dem Bereich von 0,001 bis 0,1 ausgewählt ist;
das zweite Positivelektrodenaktivmaterial aus einem oder mehreren von LiFePO₄, kohlenstoffbeschichtetem LiFePO₄, LiFe_{b}M_{c}PO₄ und kohlenstoffbeschichtetem LiFe_{b}M_{c}PO₄ ausgewählt ist, wobei M unabhängig ein oder mehrere Elemente einschließt, die aus Ti, Zn, Co, Mn, La, V, Mg, Al, Nb, W, Zr, Nb, Sm, Cr, Cu und B ausgewählt sind, b unabhängig aus dem Bereich von 0,99 bis 0,999 ausgewählt ist und b + c = 1;
optional jede der Positivelektrodenfilmschichten, die eine Mehrschichtstruktur aufweist, jeweils das erste Positivelektrodenaktivmaterial und das zweite Positivelektrodenaktivmaterial in angrenzenden Schichten enthält.

3. Positivelektrodenplatte, umfassend einen Positivelektrodenstromsammler und eine Positivelektrodenfilmschicht A und eine Positivelektrodenfilmschicht B, die jeweils auf beiden Oberflächen des Positivelektrodenstromsammlers bereitgestellt sind; wobei die Positivelektrodenfilmschicht A und die Positivelektrodenfilmschicht B unabhängig voneinander eine Einzelschichtstruktur oder eine Mehrschichtstruktur aufweisen; mindestens eine der Positivelektrodenfilmschichten A ein erstes Positivelektrodenaktivmaterial mit einer chemischen Formel LiₐAₓMn_{1-y}R_{y}P_{1-z}C_{z}O₄₋ₙDₙ enthält und mindestens eine der Positivelektrodenfilmschichten B ein zweites Positivelektrodenaktivmaterial enthält;
wobei
A ein oder mehrere Elemente einschließt, die aus Zn, Al, Na, K, Mg, Nb, Mo und W ausgewählt sind;
R ein oder mehrere Elemente einschließt, die aus Ti, V, Zr, Fe, Ni, Mg, Co, Ga, Sn, Sb, Nb und Ge ausgewählt sind;
C ein oder mehrere Elemente einschließt, die aus B, S, Si und N ausgewählt sind;
D ein oder mehrere Elemente einschließt, die aus S, F, Cl und Br ausgewählt sind;
a aus dem Bereich von 0,9 bis 1,1 ausgewählt ist, x aus dem Bereich von 0,001 bis 0,1 ausgewählt ist, y aus dem Bereich von 0,001 bis 0,5 ausgewählt ist, z aus dem Bereich von 0,001 bis 0,1 ausgewählt ist, und n aus dem Bereich von 0,001 bis 0,1 ausgewählt ist;
das zweite Positivelektrodenaktivmaterial aus einem oder mehreren von LiFePO₄, kohlenstoffbeschichtetem LiFePO₄, LiFe_{b}M_{c}PO₄ und kohlenstoffbeschichtetem LiFe_{b}M_{c}PO₄ ausgewählt ist, wobei M unabhängig ein oder mehrere Elemente einschließt, die aus Ti, Zn, Co, Mn, La, V, Mg, Al, Nb, W, Zr, Nb, Sm, Cr, Cu und B ausgewählt sind, b unabhängig aus dem Bereich von 0,99 bis 0,999 ausgewählt ist und b + c = 1.

4. Positivelektrodenplatte nach einem der Ansprüche 1 bis 3, wobei in dem zweiten Positivelektrodenaktivmaterial,
die Masse von Kohlenstoff 0,1 % bis 4 % der Masse von kohlenstoffbeschichtetem LiFePO₄ ausmacht;
und/oder
die Masse von Kohlenstoff 0,1 % bis 4 % der Masse des kohlenstoffbeschichteten LiFe_{b}M_{c}PO₄ ausmacht.

5. Positivelektrodenplatte nach einem der Ansprüche 1 bis 4, wobei das Massenverhältnis des ersten Positivelektrodenaktivmaterial zu dem zweiten Positivelektrodenaktivmaterial 1 : 7 bis 7 : 1, und optional 1 : 4 bis 4 : 1 ist.

6. Positivelektrodenplatte nach einem der Ansprüche 1 bis 5, wobei in dem zweiten Positivelektrodenaktivmaterial,
R mindestens zwei Elemente ist, die aus Ti, V, Zr, Fe, Ni, Mg, Co, Ga, Sn, Sb, Nb und Ge ausgewählt sind; und/oder
A ein beliebiges Element ist, das aus Mg und Nb ausgewählt ist, und/oder,
R mindestens zwei Elemente ist, die aus Fe, Ti, V, Co und Mg ausgewählt sind, optional Fe und ein oder mehrere Elemente, die ausgewählt sind aus Ti, V, Co und Mg, ist, und/oder,
C ist S, und/oder,
D ist F.

7. Positivelektrodenplatte nach einem der Ansprüche 1 bis 6, wobei in dem ersten Positivelektrodenaktivmaterial,
x aus dem Bereich von 0,001 bis 0,005 ausgewählt ist; und/oder
y aus dem Bereich von 0,01 bis 0,5 ausgewählt ist und optional aus dem Bereich von 0,25 bis 0,5 ausgewählt ist; und/oder
z aus dem Bereich von 0,001 bis 0,005 ausgewählt ist; und/oder
n aus dem Bereich von 0,001 bis 0,005 ausgewählt ist; und/oder
das Verhältnis von (1-y) zu y aus dem Bereich von 1 bis 4 ausgewählt ist, und optional aus dem Bereich von 1,5 bis 3 ausgewählt ist; und/oder
das Verhältnis von a zu x aus dem Bereich von 9 bis 1100 ausgewählt ist, und optional aus dem Bereich von 190 bis 998 ausgewählt ist.

8. Positivelektrodenplatte nach einem der Ansprüche 1 bis 7, wobei die Gitteränderungsrate des ersten Positivelektrodenaktivmaterial weniger als 8 % und optional weniger als 4 % beträgt, wobei die Gitteränderungsrate durch Röntgenbeugung (XRD) bestimmt wird.

9. Positivelektrodenplatte nach einem der Ansprüche 1 bis 8, wobei die Li/Mn-Antisit-Defektkonzentration des ersten Positivelektrodenaktivmaterials weniger als 2 % und optional weniger als 0,5 % beträgt und/oder wobei der Sauerstoffvalenzzustand der Oberfläche des ersten Positivelektrodenaktivmaterials weniger als -1,82 und optional -1,89 bis 1,98 beträgt, wobei zur Ermittlung der Li/Mn-Antisit-Defektkonzentration die im "Verfahren zum Bestimmen der Gitteränderungsrate" bestimmten XRD- (Röntgenbeugungs-) Ergebnisse mit der PDF- (Pulverbeugungs-) Karte eines Standardkristalls verglichen werden.

10. Positivelektrodenplatte nach einem der Ansprüche 1 bis 9, wobei die verdichtete Dichte des ersten Positivelektrodenaktivmaterials bei 3T größer als 2,0 g/cm³ und optional größer als 2,2 g/cm³ ist, wobei die verdichtete Dichte gemäß GB/T 24533-2009 bestimmt wird.

11. Positivelektrodenplatte nach einem der Ansprüche 1 bis 10, wobei die Oberfläche des ersten Positivelektrodenaktivmaterials ferner mit Kohlenstoff beschichtet ist und/oder, wobei die Summe der Masse des ersten Positivelektrodenaktivmaterials und des zweiten Positivelektrodenaktivmaterials 88 %-98,7 % der Masse der Positivelektrodenplatte ausmacht.

12. Sekundärbatterie (5), umfassend die Positivelektrodenplatte nach einem der Ansprüche 1 bis 11.

13. Batteriemodul (4), umfassend die Sekundärbatterie (5) nach Anspruch 12.

14. Batteriepack (1), umfassend das Batteriemodul (4) nach Anspruch 13.

15. Leistungsverbrauchende Vorrichtung, umfassend mindestens eines, das aus der Sekundärbatterie (5) nach Anspruch 12, dem Batteriemodul (4) nach Anspruch 13 und dem Batteriepack (1) nach Anspruch 14 ausgewählt ist.

## Revendications

1. Plaque d'électrode positive, comprenant un collecteur de courant d'électrode positive et une couche de film d'électrode positive disposée sur au moins une surface du collecteur de courant d'électrode positive, dans laquelle la couche de film d'électrode positive a une structure monocouche ou une structure multicouche ; quand la couche de film d'électrode positive a une structure monocouche, au moins l'une des couches de film d'électrode positive contient à la fois un premier matériau actif d'électrode positive de formule chimique LiₐAₓMn_{1-y}R_{y}P_{1-z}C_{z}O₄₋ₙDₙ et un deuxième matériau actif d'électrode positive ; et/ou quand la couche de film d'électrode positive a une structure multicouche, au moins l'une des couches de film d'électrode positive contient à la fois un premier matériau actif d'électrode positive de formule chimique LiₐAₓMn_{1-y}R_{y}P_{1-z}C_{z}O₄₋ₙDₙ et un deuxième matériau actif d'électrode positive ;
dans laquelle
A inclut un ou plusieurs éléments choisis parmi Zn, Al, Na, K, Mg, Nb, Mo et W ;
R inclut un ou plusieurs éléments choisis parmi Ti, V, Zr, Fe, Ni, Mg, Co, Ga, Sn, Sb, Nb et Ge ;
C inclut un ou plusieurs éléments choisis parmi B, S, Si et N ;
D inclut un ou plusieurs éléments choisis parmi S, F, Cl et Br ;
a est choisi dans la plage de 0,9 à 1,1, x est choisi dans la plage de 0,001 à 0,1, y est choisi dans la plage de 0,001 à 0,5, z est choisi dans la plage de 0,001 à 0,1, et n est choisi dans la plage de 0,001 à 0,1 ;
le deuxième matériau actif d'électrode positive est choisi parmi un ou plusieurs de LiFePO₄, LiFePO₄ revêtu de carbone, LiFe_{b}M_{c}PO₄ et LiFe_{b}M_{c}PO₄ revêtu de carbone, M incluant indépendamment un ou plusieurs éléments choisis parmi Ti, Zn, Co, Mn, La, V, Mg, Al, Nb, W, Zr, Nb, Sm, Cr, Cu et B, b est indépendamment choisi dans la plage de 0,99 à 0,999 et b + c = 1.

2. Plaque d'électrode positive, comprenant un collecteur de courant d'électrode positive et une couche de film d'électrode positive disposée sur au moins une surface du collecteur de courant d'électrode positive, dans laquelle au moins l'une des couches de film d'électrode positive a une structure multicouche, et l'une quelconque des couches de film d'électrode positive ayant une structure multicouche contient respectivement un premier matériau actif d'électrode positive de formule chimique LiₐAₓMn_{1-y}R_{y}P_{1-z}C_{z}O₄₋ₙDₙ et un deuxième matériau actif d'électrode positive dans des couches différentes ;
dans laquelle
A inclut un ou plusieurs éléments choisis parmi Zn, Al, Na, K, Mg, Nb, Mo et W ;
R inclut un ou plusieurs éléments choisis parmi Ti, V, Zr, Fe, Ni, Mg, Co, Ga, Sn, Sb, Nb et Ge ;
C inclut un ou plusieurs éléments choisis parmi B, S, Si et N ;
D inclut un ou plusieurs éléments choisis parmi S, F, Cl et Br ;
a est choisi dans la plage de 0,9 à 1,1, x est choisi dans la plage de 0,001 à 0,1, y est choisi dans la plage de 0,001 à 0,5, z est choisi dans la plage de 0,001 à 0,1, et n est choisi dans la plage de 0,001 à 0,1 ;
le deuxième matériau actif d'électrode positive est choisi parmi un ou plusieurs de LiFePO₄, LiFePO₄ revêtu de carbone, LiFe_{b}M_{c}PO₄ et LiFe_{b}M_{c}PO₄ revêtu de carbone, M incluant indépendamment un ou plusieurs éléments choisis parmi Ti, Zn, Co, Mn, La, V, Mg, Al, Nb, W, Zr, Nb, Sm, Cr, Cu et B, b est indépendamment choisi dans la plage de 0,99 à 0,999 et b + c = 1 ;
éventuellement, l'une quelconque des couches de film d'électrode positive ayant une structure multicouche contient respectivement le premier matériau actif d'électrode positive et le deuxième matériau actif d'électrode positive dans des couches adjacentes.

3. Plaque d'électrode positive, comprenant un collecteur de courant d'électrode positive et une couche de film d'électrode positive A et une couche de film d'électrode positive B respectivement disposées sur les deux surfaces du collecteur de courant d'électrode positive ; dans laquelle la couche de film d'électrode positive A et la couche de film d'électrode positive B ont indépendamment une structure monocouche ou une structure multicouche ; au moins l'une des couches de film d'électrode positive A contient un premier matériau actif d'électrode positive de formule chimique LiₐAₓMn_{1-y}R_{y}P_{1-z}C_{z}O₄₋ₙDₙ, et au moins l'une des couches de film d'électrode positive B contient un deuxième matériau actif d'électrode positive ;
dans laquelle
A inclut un ou plusieurs éléments choisis parmi Zn, Al, Na, K, Mg, Nb, Mo et W ;
R inclut un ou plusieurs éléments choisis parmi Ti, V, Zr, Fe, Ni, Mg, Co, Ga, Sn, Sb, Nb et Ge ;
C inclut un ou plusieurs éléments choisis parmi B, S, Si et N ;
D inclut un ou plusieurs éléments choisis parmi S, F, Cl et Br ;
a est choisi dans la plage de 0,9 à 1,1, x est choisi dans la plage de 0,001 à 0,1, y est choisi dans la plage de 0,001 à 0,5, z est choisi dans la plage de 0,001 à 0,1, et n est choisi dans la plage de 0,001 à 0,1 ;
le deuxième matériau actif d'électrode positive est choisi parmi un ou plusieurs de LiFePO₄, LiFePO₄ revêtu de carbone, LiFe_{b}M_{c}PO₄ et LiFe_{b}M_{c}PO₄ revêtu de carbone, M incluant indépendamment un ou plusieurs éléments choisis parmi Ti, Zn, Co, Mn, La, V, Mg, Al, Nb, W, Zr, Nb, Sm, Cr, Cu et B, b est indépendamment choisi dans la plage de 0,99 à 0,999 et b + c = 1.

4. Plaque d'électrode positive selon l'une quelconque des revendications 1 à 3, dans laquelle dans le deuxième matériau actif d'électrode positive,
la masse du carbone représente de 0,1 % à 4 % de la masse de LiFePO₄ revêtu de carbone ; et/ou
la masse du carbone représente de 0,1 % à 4 % de la masse de LiFe_{b}M_{c}PO₄ revêtu de carbone.

5. Plaque d'électrode positive selon l'une quelconque des revendications 1 à 4, dans laquelle le rapport massique du premier matériau actif d'électrode positive au deuxième matériau actif d'électrode positive est de 1:7 à 7:1, et éventuellement de 1:4 à 4:1.

6. Plaque d'électrode positive selon l'une quelconque des revendications 1 à 5, dans laquelle dans le premier matériau actif d'électrode positive,
R représente au moins deux éléments choisis parmi Ti, V, Zr, Fe, Ni, Mg, Co, Ga, Sn, Sb, Nb et Ge ; et/ou
A représente un élément quelconque choisi parmi Mg et Nb, et/ou,
R représente au moins deux éléments choisis parmi Fe, Ti, V, Co et Mg,
éventuellement représente Fe et un ou plusieurs éléments choisis parmi Ti, V, Co et Mg, et/ou,
C représente S, et/ou,
D représente F.

7. Plaque d'électrode positive selon l'une quelconque des revendications 1 à 6, dans laquelle dans le premier matériau actif d'électrode positive,
x est choisi dans la plage de 0,001 à 0,005 ; et/ou
y est choisi dans la plage de 0,01 à 0,5, et éventuellement choisi dans la plage de 0,25 à 0,5 ; et/ou
z est choisi dans la plage de 0,001 à 0,005 ; et/ou
n est choisi dans la plage de 0,001 à 0,005 ; et/ou
le rapport de (1-y) à y est choisi dans la plage de 1 à 4, et éventuellement choisi dans la plage de 1,5 à 3 ; et/ou
le rapport de a à x est choisi dans la plage de 9 à 1100, et éventuellement choisi dans la plage de 190 à 998.

8. Plaque d'électrode positive selon l'une quelconque des revendications 1 à 7, dans laquelle le taux de changement de réseau du premier matériau actif d'électrode positive est inférieur à 8 %, et éventuellement inférieur à 4 %, le taux de changement de réseau étant déterminé par diffraction des rayons X (XRD).

9. Plaque d'électrode positive selon l'une quelconque des revendications 1 à 8, dans laquelle la concentration de défauts antisites Li/Mn du premier matériau actif d'électrode positive est inférieure à 2 %, et éventuellement inférieure à 0,5 % et/ou, dans laquelle l'état de valence de l'oxygène de surface du premier matériau actif d'électrode positive est inférieur à - 1,82, et éventuellement de -1,89 à -1,98, dans laquelle afin d'obtenir la concentration de défauts antisites Li/Mn les résultats de XRD (diffraction des rayons X) déterminés dans la « Méthode de détermination de taux de changement de réseau » sont comparés à la carte du PDF (fichier de diffraction de poudre) d'un cristal standard.

10. Plaque d'électrode positive selon l'une quelconque des revendications 1 à 9, dans laquelle la masse volumique compactée du premier matériau actif d'électrode positive à 3T est supérieure à 2,0 g/cm³, et éventuellement supérieure à 2,2 g/cm³, la masse volumique compactée étant déterminée selon la norme GB/T 24533-2009.

11. Plaque d'électrode positive selon l'une quelconque des revendications 1 à 10, dans laquelle la surface du premier matériau actif d'électrode positive est en outre revêtue de carbone et/ou, dans laquelle la somme de la masse du premier matériau actif d'électrode positive et du deuxième matériau actif d'électrode positive représente 88 % à 98,7 % de la masse de la plaque d'électrode positive.

12. Batterie rechargeable (5), comprenant la plaque d'électrode positive selon l'une quelconque des revendications 1 à 11.

13. Module de batterie (4) comprenant la batterie rechargeable (5) selon la revendication 12.

14. Bloc-batterie (1), comprenant le module de batterie (4) selon la revendication 13.

15. Dispositif de consommation d'énergie, comprenant au moins l'un de la batterie rechargeable (5) selon la revendication 12, du module de batterie (4) selon la revendication 13 et du bloc-batterie (1) selon la revendication 14.
